# EUROPEAN PATENT APPLICATION

(11) **EP 4 783 421 A1**
(43) Date of publication of application: **29.07.2026**
(21) Application number: 25222100.7
(22) Date of filing: 10.12.2025
(51) Int. Cl.: H02K 3/12, H02K 3/28

(54) **STATOR**

(30) Priority: 27.01.2025 JP 2025011742
(71) Applicant: Toyota Jidosha Kabushiki Kaisha, Toyota-shi, Aichi-ken 471-8571 (JP)
(72) Inventor: OHIRA, Kengo, Toyota-shi, 471-8571 (JP)
(74) Representative: TBK

(57) **Abstract**

In a stator (1) of the present disclosure, on a side of a first end of a stator core (2), each two of leg portions that protrude from a 2·i-th layer of one of a first slot (21) and a second slot (22) spaced five slots apart that lies on one side in a circumferential direction and from a 2·i-1-th layer of the other one are joined together at leading end portions, and each two of leg portions that protrude from a 2·i-th layer of one of a first slot (21) and a second slot (22) spaced five slots apart that lies on the one side in the circumferential direction and from a 2·i+1-th layer of the other one are joined together at leading end portions such that a winding end portion of the 2·i-th layer and the winding start portion of the 2·i+1-th layer are connected to each other.

## Description

### BACKGROUND OF THE INVENTION

### 1. Field of the Invention

The present disclosure relates to a stator.

### 2. Description of Related Art

As a related art, there is a stator including a stator core that has a plurality of slots arrayed in a circumferential direction and three-phase (U-phase, V-phase, and W-phase) stator coils that are wound on the stator core (e.g., see Japanese Patent No. 5896250 (JP 5896250 B)). In this stator, the three-phase stator coils each include a multiple of 4 of parallel windings (parallel coils) connected in parallel, and are connected in Y-connection. Each parallel winding is formed by inserting a pair of linear portions (leg portions) of each of a plurality of U-shaped conductor segments (segment coils) into corresponding slots so as to protrude from a first end (twisting side) in an axial direction of the stator core, and twisting each linear portion in the circumferential direction and joining together leading end portions of each two of corresponding linear portions. Specifically, the conductor segments include a first conductor segment having the linear portions that are inserted into two first slots spaced five slots apart, a second conductor segment having the linear portions that are inserted into two second slots lying on each side of the first slots and spaced seven slots apart, and a third conductor segment having the linear portions that are inserted into predetermined first and second slots spaced six slots apart. The linear portions of the first conductor segment are inserted into a 2·i-1-th layer (in the example of JP 5896250 B, i = 3, 2, 1) of one of the two first slots that lies on one side (winding start side) in the circumferential direction and into a 2·i-th layer of the other one. The linear portions of the second conductor segment are inserted into a 2·i-1-th layer of one of the two second slots that lies on the one side in the circumferential direction and into a 2·i-th layer of the other one such that the second conductor segment straddles the corresponding first conductor segment. Further, the leg portions of the third conductor segment are inserted into a 2·i-th layer of one of the predetermined first and second slots spaced six slots apart that lies on the one side in the circumferential direction and into a 2·i+1-th layer of the other one, and form a crossover (57) that straddles the border between the 2·1-th layer and the 2·i+1-th layer on the side of a second end (opposite from the twisting side) of the stator core. On the side of the first end of the stator core, each two of leg portions that protrude from the 2·i-th layer of one of the two slots spaced six slots apart that lies on the one side in the circumferential direction and from the 2·i-1-th layer of the other one are twisted and joined together at their leading end portions. Thus, in each parallel winding, the linear portions of the conductor segments are evenly disposed in both the first and second slots adjacent to each other in the circumferential direction, which can eliminate a deviation in the timing when an inductive voltage is generated in each magnetic pole of the parallel winding as a magnet of a rotor passes, thereby preventing generation of a circulating current in each parallel winding.

As another related art, there is a circular array forming device for segment coils that arrays, in a circle, a plurality of segment coils each having first and second end portions (leg portions) connected to each other through a bent portion or a curved portion (e.g., see Japanese Patent No. 3975891 (JP 3975891 B)). This circular array forming device includes an array forming circular part, a segment coil inserting part, and a coil guiding part. The array forming circular part includes housing grooves that are disposed at a predetermined pitch along a cylindrical outer circumferential side so as to open in a first direction of a cylinder axis, and that support each segment coil so as to be turnable around the first end portion as a turning axis. The array forming circular part performs a circular turning motion centered at the cylinder axis. In accordance with the circular turning motion of the array forming circular part, the segment coil inserting part inserts the first end portions of the segment coils into the housing groove, on an at least one-by-one basis, continuously from a tail end of the housing grooves in which the first end portions have been inserted. In accordance with the circular turning motion of the array forming circular part, the coil guiding part guides the second end portion of the segment coil, having the first end portion inserted in the housing groove, into a housing groove different from the housing groove in which the first end portion of the segment coil is inserted. In this circular array forming device, in accordance with the circular turning motion of the array forming circular part, insertion of the first end portions of the segment coils into the housing grooves and guiding of the second end portions of the segment coils into the housing grooves are performed simultaneously and concurrently. Thus, it is possible to, while shortening the work time, array a plurality of segment coils in a circle such that the bent portions or the curved portions of the segment coils are oriented in the same inclination direction with respect to the radial direction of the stator core.

### SUMMARY OF THE INVENTION

In a rotating electrical machine including a stator like the above one described in JP 5896250 B, the output characteristics change according to the number of turns (hereinafter referred to as "the number of effective turns") that is obtained by dividing the number of linear portions (the number of layers) in one slot by the number of parallel windings (parallel number). In some cases, a stator having a non-integer number (e.g., 1.5 or 2.5) of turns is demanded from the side of a target for which the rotating electrical machine is installed. Even when the number of effective turns is not an integer, the stator described in JP 5896250 B can prevent generation of a circulating current among the parallel windings. In the stator described in JP 5896250 B, however, the inclination direction, with respect to the radial direction of the stator core, of the portion of the third conductor segment that connects the leg portions to each other (the portion that forms the crossover) is opposite from that of the first and second conductor segments. For this reason, the first to third conductor segments cannot be arrayed in a circle using the circular array forming device as described in JP 3975891 B. Thus, it is necessary to mount the third conductor segments onto the stator using a multi-axis robot or the like, which leads to reduced productivity and an increased manufacturing cost of the stator.

In view of this, the present disclosure provides a stator that can inhibit generation of a circulating current even when the number of effective turns is not an integer, and that achieves improved productivity and a lower manufacturing cost.

A stator according to a first aspect of the present disclosure includes: a stator core including a plurality of slots formed at intervals in a circumferential direction so as to each extend in a radial direction; and a plurality of segment coils each of which has a pair of leg portions each inserted into a different one of the slots, the segment coils forming a plurality of stator coils by electrically joining leading end portions of each pair of corresponding leg portions of the segment coils. n = 6·p is met, where p is the number of poles and n is the number of the slots. The stator coils each include 4·m parallel coils that are connected in parallel, where m is an integer equal to or larger than 1. An even number of the leg portions are inserted into each of the slots in a row in the radial direction. The segment coils include a first segment coil, a second segment coil, and a third segment coil. The leg portions of the first segment coil are inserted into a 2·i-1-th layer of one of two first slots spaced six slots apart that lies on one side in the circumferential direction and into a 2·i-th layer of the other one of the two first slots such that the leg portions protrude from a first end of the stator core, where i is an integer equal to or larger than 1 and i = 1, ..., imax. The leg portions of the second segment coil are inserted into a 2·i-1-th layer of one of two second slots lying on each side of the two first slots and spaced eight slots apart that lies on the one side in the circumferential direction and into a 2·i-th layer of the other one of the two second slots such that the leg portions protrude from the first end of the stator core, and the second segment coil straddling a corresponding first segment coil. The leg portions of the third segment coil are inserted into a 2·i-1-th layer of one of predetermined first slot and second slot spaced seven slots apart that lies on the one side in the circumferential direction and into a 2·i-th layer of the other one of the predetermined first slot and second slot such that the leg portions protrude from the first end of the stator core, and the third segment coil forming a winding start portion in a 2·i+1-th layer. On a side of the first end of the stator core, each two of the leg portions that protrude from the 2·i-th layer of one of a first set including a first slot and a second slot spaced five slots apart that lies on the one side in the circumferential direction and from the 2·i-1-th layer of the other one of the first set are twisted and joined together at leading end portions, and each two of the leg portions that protrude from the 2·i-th layer of one of a second set including a first slot and a second slot spaced five slots apart that lies on the one side in the circumferential direction and from the 2·i+1-th layer of the other one of the second set are twisted and joined together at leading end portions such that a winding end portion of the 2·i-th layer and the winding start portion of the 2·i+1-th layer are connected to each other.

Thus, each of the parallel coils is basically formed by inserting the second segment coil into two second slots spaced eight slots apart so as to straddle the first segment coil that is inserted in two first slots spaced six slots apart, and joining the corresponding leg portions together at a five-slot pitch on the side of the first end of the stator core. In this way, even when the number of effective turns is not an integer, a circulating current generated due to a deviation in the timing when an inductive voltage is generated in each magnetic pole of the parallel coils as a magnet of a rotor passes can be canceled inside each of the parallel windings to inhibit the circulating current from flowing through the stator coils. In the stator of the present disclosure, the leg portions of the first to third segment coils that form one-phase stator coil are inserted into sets of three slots adjacent to one another in the circumferential direction, and each of the stator coils is wound on the stator core by short-pitch winding. Thus, a rotating electrical machine including this stator can achieve a higher output and a reduction in vibration and noise compared with a rotating electrical machine including a stator in which stator coils are wound on a stator core by full-pitch winding. In addition, this stator can eliminate the need for skew etc., for reducing torque ripple. Further, in the stator of the present disclosure, the inclination direction, with respect to the radial direction of the stator core, of the portion of the third segment coil that connects the leg portions to each other (crossover portion) is the same direction as that of the first and second segment coils, which makes it possible to mount the first to third segment coils to be wound in the 2·i-1-th layer and the 2·i-th layer onto the stator core after arraying these segment coils in a circle by a commonly known circular array forming device. Thus, the takt time can be shortened, and the cost can be reduced by omitting the use of a multi-axis robot or the like. As a result, even when the number of effective turns is not an integer, the stator of the present disclosure can inhibit generation of a circulating current and achieve improved productivity and a lower manufacturing cost.

In the first aspect, on the side of the first end of the stator core, a leading end portion of one of the leg portions of the third segment coil that protrudes from the 2·i+1-th layer of one of the predetermined first slot and second slot that lies on the one side in the circumferential direction and a leg portion that protrudes from the 2·i-th layer of one of the slots spaced five slots apart from that one of the predetermined first slot and second slot that lies on the one side may be twisted and joined together at leading end portions.

In the first aspect, one or a plurality of the leg portions that protrude from the first end of the stator core may be connected to a power line through which electricity is applied.

In the first aspect, the stator coils may be connected in Y-connection. One or a plurality of the leg portions that protrude from the first end of the stator core may be connected to a neutral point.

In the first aspect, a combination (2·imax, 4·m) of 2·imax that is the number of layers in each of the slots and 4·m that is the number of the parallel coils may be one of (6, 4), (10, 4), (14, 4), and (12, 8).

A stator according to a second aspect of the present disclosure includes: a stator core including a plurality of slots formed at intervals in a circumferential direction so as to each extend in a radial direction; and a plurality of segment coils each of which has a pair of leg portions each inserted into a different one of the slots, the segment coils forming a plurality of stator coils by electrically joining leading end portions of each pair of corresponding leg portions of the segment coils. n = 6·p is met, where p is the number of poles and n is the number of the slots. The stator coils each include 4·m parallel coils that are connected in parallel, where m is an integer equal to or larger than 1. An even number of the leg portions are inserted into each of the slots in a row in the radial direction. The segment coils include a first segment coil, a second segment coil, and a third segment coil. The leg portions of the first segment coil are inserted into a 2·i-1-th layer of one of two first slots spaced four slots apart that lies on one side in the circumferential direction and into a 2·i-th layer of the other one of the two first slots such that the leg portions protrude from a first end of the stator core, where i is an integer equal to or larger than 1 and i = 1, ..., imax. The leg portions of the second segment coil are inserted into a 2·i-1-th layer of one of two second slots lying on each side of the two first slots and spaced six slots apart that lies on the one side in the circumferential direction and into a 2·i-th layer of the other one of the two second slots such that the leg portions protrude from the first end of the stator core, and the second segment coil straddling a corresponding first segment coil. The leg portions of the third segment coil is inserted into a 2·i-1-th layer of one of predetermined first slot and second slot spaced five slots apart that lies on the one side in the circumferential direction and into a 2·i-th layer of the other one of the predetermined first slot and second slot such that the leg portions protrude from the first end of the stator core, and the third segment coil forming a winding start portion in a 2·i+1-th layer. On a side of the first end of the stator core, each two of the leg portions that protrude from the 2·i-th layer of one of a first set including a first slot and a second slot spaced seven slots apart that lies on the one side in the circumferential direction and from the 2·i-1-th layer of the other one of the first set are twisted and joined together at leading end portions, and each two of the leg portions that protrude from the 2·i-th layer of one of a second set including a first slot and a second slot spaced seven slots apart that lies on the one side in the circumferential direction and from the 2·i+1-th layer of the other one of the second set are twisted and joined together at leading end portions such that a winding end portion of the 2·i-th layer and the winding start portion of the 2·i+1-th layer are connected to each other.

Thus, each of the parallel coils is basically formed by inserting the second segment coil into two second slots spaced six slots apart so as to straddle the first segment coil that is inserted in two first slots spaced four slots apart, and joining the corresponding leg portions together at a seven-slot pitch on the side of the first end of the stator core. In this way, even when the number of effective turns is not an integer, a circulating current generated due to a deviation in the timing when an inductive voltage is generated in each magnetic pole of the parallel coils as a magnet of a rotor passes can be canceled inside each of the parallel windings to inhibit the circulating current from flowing through the stator coils. In another stator of the present disclosure, the leg portions of the first to third segment coils that form one-phase stator coil are inserted into sets of three slots adjacent to one another in the circumferential direction, and each of the stator coils is wound on the stator core by short-pitch winding. Thus, a rotating electrical machine including this stator can achieve a higher output and a reduction in vibration and noise compared with a rotating electrical machine including a stator in which stator coils are wound on a stator core by full-pitch winding. In addition, this stator can eliminate the need for skew etc., for reducing torque ripple. Further, in the stator of the present disclosure, the inclination direction, with respect to the radial direction of the stator core, of the portion of the third segment coil that connects the leg portions to each other (crossover portion) is the same direction as that of the first and second segment coils, which makes it possible to mount the first to third segment coils to be wound in the 2·i-1-th layer and the 2·i-th layer onto the stator core after arraying these segment coils in a circle by a commonly known circular array forming device. Thus, the takt time can be shortened, and the cost can be reduced by omitting the use of a multi-axis robot or the like. As a result, even when the number of effective turns is not an integer, the stator of the present disclosure can inhibit generation of a circulating current and achieve improved productivity and a lower manufacturing cost.

In the second aspect, on the side of the first end of the stator core, a leading end portion of one of the leg portions of the third segment coil that protrudes from the 2·i+1-th layer of one of the predetermined first slot and second slot that lies on the one side in the circumferential direction and a leg portion that protrudes from the 2·i-th layer of one of the slots spaced seven slots apart from that one of the predetermined first slot and second slot that lies on the one side may be twisted and joined together at leading end portions.

In the second aspect, one or a plurality of the leg portions that protrude from the first end of the stator core may be connected to a power line through which electricity is applied.

In the second aspect, the stator coils may be connected in Y-connection. One or a plurality of the leg portions that protrude from the first end of the stator core may be connected to a neutral point.

In the second aspect, a combination (2·imax, 4·m) of 2·imax that is the number of layers in each of the slots and 4·m that is the number of the parallel coils may be one of (6, 4), (10, 4), (14, 4), and (12, 8).

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view showing a stator of the present disclosure;
FIG. 2 is a schematic view showing one example of stator coils of the stator of the present disclosure;
FIG. 3 is a schematic configuration view showing segment coils forming the stator coils of the stator of the present disclosure;
FIG. 4 is an explanatory view illustrating an aspect of mounting of the segment coils onto a stator core of the stator of the present disclosure;
FIG. 5 is a perspective view showing an assembly of the segment coils;
FIG. 6 is a perspective view showing a procedure of mounting the assembly of the segment coils onto the stator core;
FIG. 7 is an enlarged perspective view showing a main part of the stator of the present disclosure;
FIG. 8 is a schematic view showing another stator coil that can be adopted for the stator of the present disclosure; and
FIG. 9 is an explanatory view illustrating another aspect of mounting of the segment coils onto the stator core of the stator of the present disclosure.

### DETAILED DESCRIPTION OF EMBODIMENTS

Next, a mode for implementing the invention of the present disclosure will be described with reference to the drawings.

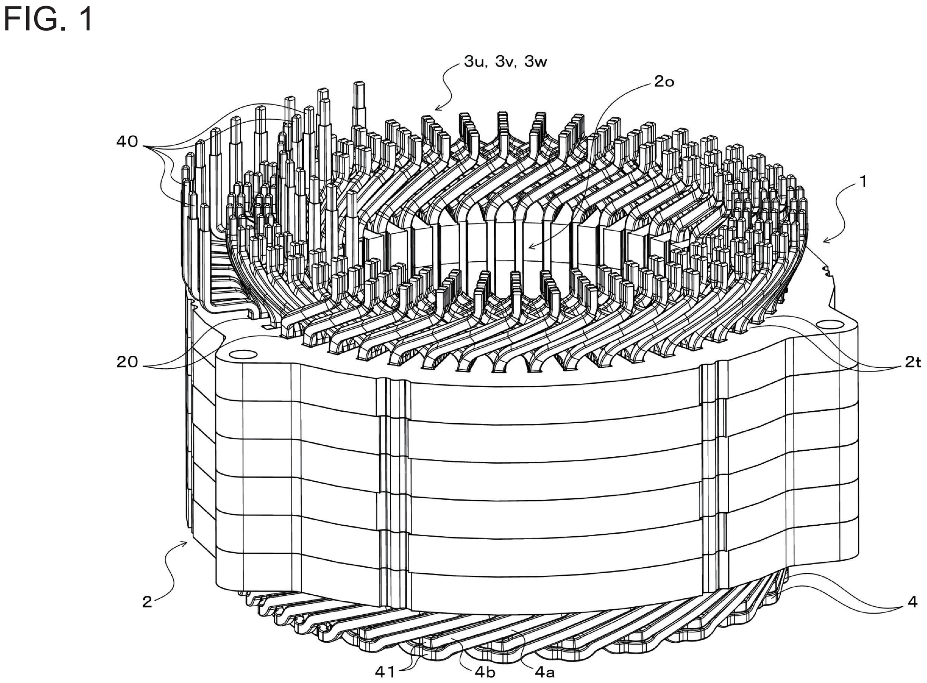

FIG. 1 is a perspective view showing a stator 1 of the present disclosure. Together with a rotor (not shown), the stator 1 shown in this view compose a three-phase alternating-current electric motor (rotating electrical machine) to be used as a travel drive source or a power generator of, for example, a battery electric vehicle or a hybrid electric vehicle. In this embodiment, the stator 1 includes an annular stator core 2, a stator coil 3u (U-phase coil), a stator coil 3v (V-phase coil), and a stator coil 3w (W-phase coil).

The stator core 2 of the stator 1 is formed in an annular shape by, for example, stacking a plurality of magnetic steel sheets, each formed in a substantially ring shape, and coupling them together in a stacking direction by pressing, or by, for example, pressure-forming and sintering a ferromagnetic powder. As shown in FIG. 1, the stator core 2 includes a center hole 2o in which the rotor is disposed, a plurality of teeth portions 2t that extends in a radial direction from an annular outer circumferential portion (yoke portion) toward a shaft center and lies adjacent to one another at regular intervals in the circumferential direction, and a plurality of (in this embodiment, for example, 48) slots 20 that is each formed between adjacent teeth portions 2t. The slots 20 each extend in the radial direction of the stator core 2, are arrayed in the circumferential direction at regular intervals, and open to the center hole 2o. In each slot 20, an insulator (insulating paper; not shown) is disposed. Further, in the stator 1, the same number of magnetic poles as the number of magnetic poles of the rotor (in this embodiment, eight) are formed, and when the number of the magnetic poles (pole number) of the stator 1 is "p" and the number of the slots 20 is "n," a relationship n = 6·p holds true.

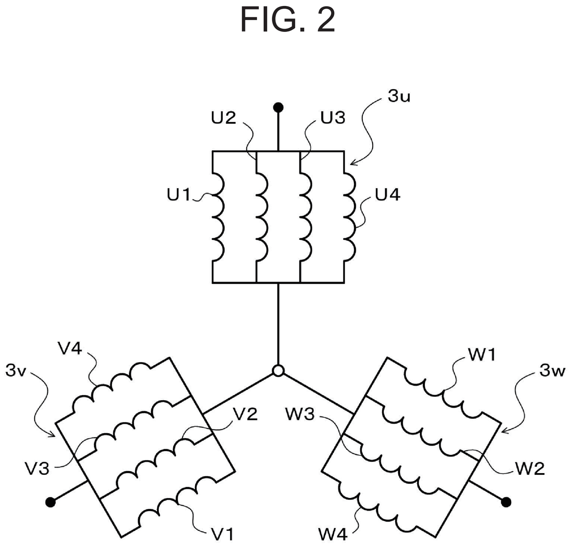

The stator coils 3u, 3v, 3w are each formed by electrically joining a plurality of segment coils (coil wire rods) 4 together. As shown in FIG. 2, the stator coil 3u includes four parallel coils U1, U2, U3, and U4 that are electrically connected in parallel. The stator coil 3v includes four parallel coils V1, V2, V3, and V4 that are electrically connected in parallel to one another, and the stator coil 3w includes four parallel coils W1, W2, W3, and W4 that are electrically connected in parallel to one another. As shown in FIG. 2, the stator coils 3u, 3v, 3w are connected to one another in star connection (Y-connection). That is, the parallel coils U1 to U4, V1 to V4, and W1 to W4 are connected to one another in so-called 4Y-connection.

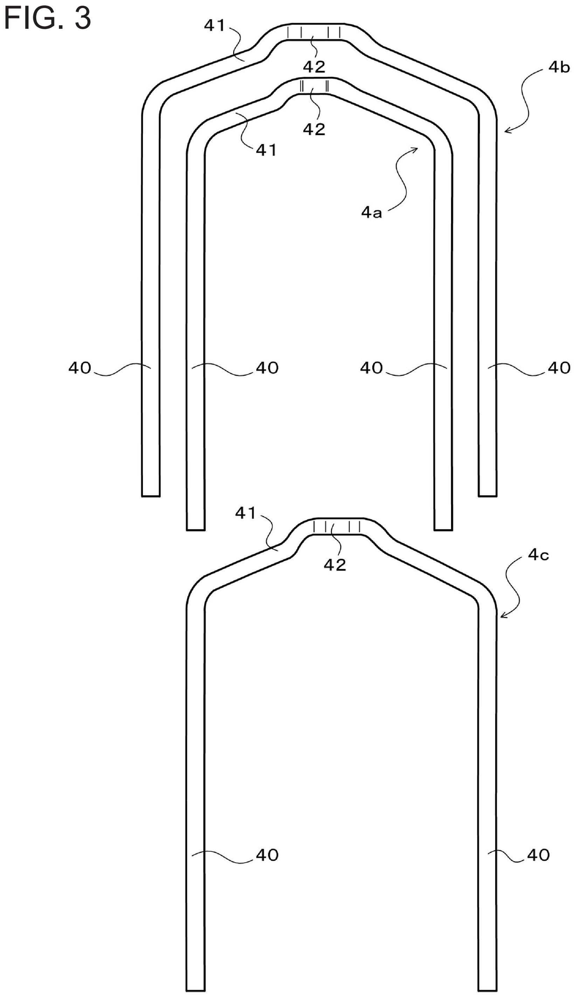

The segment coil 4 is an electric conductor formed by, for example, bending a rectangular wire, having an enamel-resin insulation film formed on its surface, in a flatwise direction and an edgewise direction. In this embodiment, as shown in FIG. 3, the segment coils 4 include a first segment coil 4a, a second segment coil 4b, and a third segment coil 4c. The first to third segment coils 4a, 4b, 4c are formed in a substantially U-shape, and each have a pair of (two) leg portions 40 and a crossover portion 41 that connects the leg portions 40 to each other. In the crossover portions 41 of the first to third segment coils 4a, 4b, 4c, a crank portion 42 is formed so as to extend obliquely between two flatwise bent portions. The two leg portions 40 of each of the first to third segment coils 4a, 4b, 4c are each inserted into a different slot 20 from the side of a second end of the stator core 2 so as to protrude from a first end (the upper end in FIG. 1) of the stator core 2, and the crossover portions 41 of the first to third segment coils 4a, 4b, 4c are arrayed on the side of the second end of the stator core 2.

In this embodiment, the first to third segment coils 4a, 4b, 4c are mounted onto the stator core 2 such that an even number of (in this embodiment, six) leg portions 40 protrude from each of the slots 20 so as to be adjacent to one another in the radial direction, and each of a plurality of layers is formed by the leg portions 40 that protrude from the respective slots 20 and lie adjacent to one another in the circumferential direction of the stator core 2. Hereinafter, a layer of the leg portions 40 (leading end portions) lying adjacent to one another in the circumferential direction on an outermost circumferential side of the stator core 2 will be referred to as a "first layer"; layers on a radially inner side will be referred to sequentially as a "second layer," a "third layer," and so on; and a layer of the leg portions 40 lying adjacent to one another in the circumferential direction on an innermost circumferential side will be referred to as a "sixth layer." The number of "layers" in the stator 1 matches the number of the leg portions 40 arrayed in each slot 20.

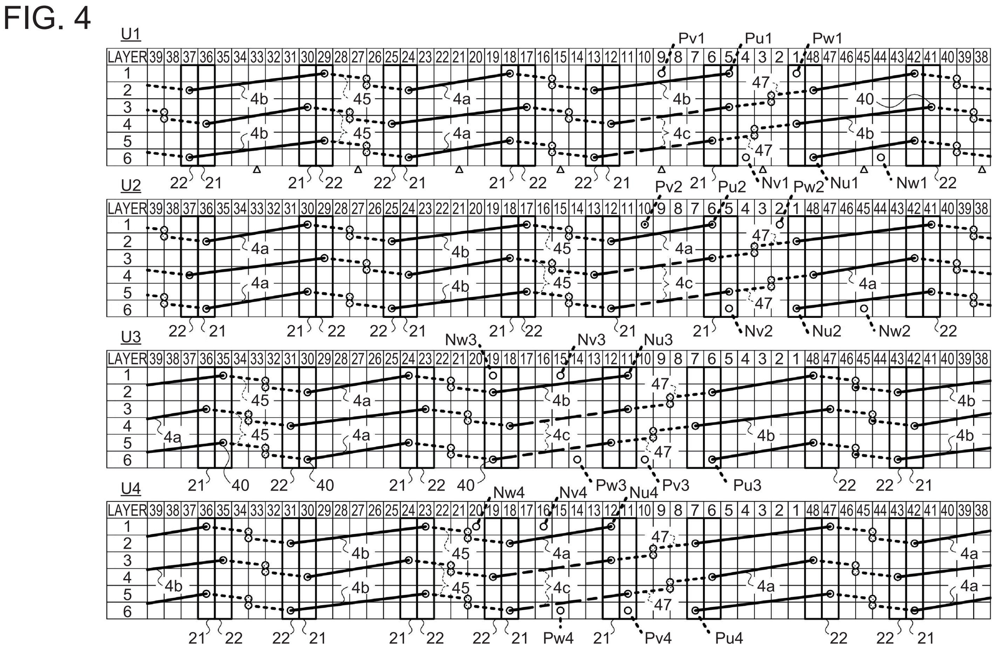

Subsequently, an aspect of mounting of the first to third segment coils 4a, 4b, 4c onto the stator core 2 will be described with reference to FIG. 4, by taking the stator coil 3u as an example. As shown in FIG. 4, the leg portions 40 of each first segment coil 4a (see the circles in FIG. 4) are inserted into a 2·i-1-th layer (where "i" is an integer equal to or larger than 1 and i = 1, ..., imax (in this embodiment, imax = 3)) of one of two first slots 21 spaced six slots apart that lies on one side (winding start side) in the circumferential direction and into a 2·i-th layer of the other one from the side of the second end of the stator core 2 (the near side of the sheet plane of FIG. 4) so as to protrude from the first end of the stator core 2 (the far side of the sheet plane of FIG. 4).

More specifically, as shown in FIG. 4, the leg portions 40 of the first segment coils 4a that form the parallel coil U1 of the stator coil 3u are inserted into the first layer of the slot No. 18 and the second layer of the slot No. 24; the first layer of the slot No. 42 and the second layer of the slot No. 48; the third layer of the slot No. 30 and the fourth layer of the slot No. 36; the fifth layer of the slot No. 18 and the sixth layer of the slot No. 24; and the fifth layer of the slot No. 42 and the sixth layer of the slot No. 48. As shown in FIG. 4, the leg portions 40 of the first segment coils 4a that form the parallel coil U2 are inserted into the first layer of the slot No. 6 and the second layer of the slot No. 12; the first layer of the slot No. 30 and the second layer of the slot No. 36; the third layer of the slot No. 18 and the fourth layer of the slot No. 24; the third layer of the slot No. 42 and the fourth layer of the slot No. 48; and the fifth layer of the slot No. 30 and the sixth layer of the slot No. 36.

Further, as shown in FIG. 4, the leg portions 40 of the first segment coils 4a that form the parallel coil U3 are inserted into the first layer of the slot No. 24 and the second layer of the slot No. 30; the first layer of the slot No. 48 and the second layer of the slot No. 6; the third layer of the slot No. 36 and the fourth layer of the slot No. 42; the fifth layer of the slot No. 24 and the sixth layer of the slot No. 30; and the fifth layer of the slot No. 48 and the sixth layer of the slot No. 6. As shown in FIG. 4, the leg portions 40 of the first segment coils 4a that form the parallel coil U4 are inserted into the first layer of the slot No. 12 and the second layer of the slot No. 18; the first layer of the slot No. 36 and the second layer of the slot No. 42; the third layer of the slot No. 24 and the fourth layer of the slot No. 30; the third layer of the slot No. 48 and the fourth layer of the slot No. 6; and the fifth layer of the slot No. 36 and the sixth layer of the slot No. 42.

The leg portions 40 of each second segment coil 4b (see the circles in FIG. 4) are inserted into a 2·i-1-th layer of one of two second slots 22 lying on each side of the first slots 21 and spaced eight slots apart that lies on the one side (winding start side) in the circumferential direction and into a 2·i-th layer of the other one from the side of the second end of the stator core 2 so as to protrude from the first end of the stator core 2, and the crossover portion 41 of each second segment coil 4b straddles the crossover portion 41 of the corresponding first segment coil 4a (see FIG. 1). More specifically, as shown in FIG. 4, the leg portions 40 of the second segment coils 4b that form the parallel coil U1 of the stator coil 3u are inserted into the first layer of the slot No. 5 and the second layer of the slot No. 13; the first layer of the slot No. 9 and the second layer of the slot No. 37; the third layer of the slot No. 17 and the fourth layer of the slot No. 25; the third layer of the slot No. 41 and the fourth layer of the slot No. 1; and the fifth layer of the slot No. 29 and the sixth layer of the slot No. 37. As shown in FIG. 4, the leg portions 40 of the second segment coils 4b that form the parallel coil U2 are inserted into the first layer of the slot No. 17 and the second layer of the slot No. 25; the first layer of the slot No. 41 and the second layer of the slot No. 1; the third layer of the slot No. 29 and the fourth layer of the slot No. 37; the fifth layer of the slot No. 17 and the sixth layer of the slot No. 25; and the fifth layer of the slot No. 41 and the sixth layer of the slot No. 1.

Further, as shown in FIG. 4, the leg portions 40 of the second segment coils 4b that form the parallel coil U3 are inserted into the first layer of the slot No. 11 and the second layer of the slot No. 19; the first layer of the slot No. 35 and the second layer of the slot No. 43; the third layer of the slot No. 23 and the fourth layer of the slot No. 31; the third layer of the slot No. 47 and the fourth layer of the slot No. 7; and the fifth layer of the slot No. 35 and the sixth layer of the slot No. 43. As shown in FIG. 4, the leg portions 40 of the second segment coils 4b that form the parallel coil U4 are inserted into the first layer of the slot No. 23 and the second layer of the slot No. 31; the first layer of the slot No. 47 and the second layer of the slot No. 7; the third layer of the slot No. 35 and the fourth layer of the slot No. 43; the fifth layer of the slot No. 23 and the sixth layer of the slot No. 31; and the fifth layer of the slot No. 47 and the sixth layer of the slot No. 7.

The leg portions 40 of each third segment coil 4c (see the circles in FIG. 4) are inserted into a 2·i + 1 (= 2·(i + 1)-1)-th layer of one of predetermined first and second slots 21, 22 spaced seven slots apart that lies on the one side (winding start side) in the circumferential direction and into a 2·(i + 1)-th layer of the other one from the side of the second end of the stator core 2 so as to protrude from the first end of the stator core 2, and one of the leg portions 40 forms a winding start portion in the 2·1 + 1-th layer. That is, the parallel coil U1 of the stator coil 3u includes two third segment coils 4c. As shown in FIG. 4, the leg portions 40 of one of the third segment coils 4c of the parallel coil U1 are inserted into the third layer of the slot No. 5 and the fourth layer of the slot No. 12 and form a winding start portion in the third layer (2·i + 1-th layer). As shown in FIG. 4, the leg portions 40 of the other one of the third segment coils 4c of the parallel coil U1 are inserted into the fifth layer of the slot No. 6 and the sixth layer of the slot No. 13 and form a winding start portion in the fifth layer (2·i + 1-th layer).

The parallel coil U2 of the stator coil 3u includes two third segment coils 4c. As shown in FIG. 4, the leg portions 40 of one of the third segment coils 4c of the parallel coil U2 are inserted into the third layer of the slot No. 6 and the fourth layer of the slot No. 13 and form a winding start portion in the third layer (2·i + 1-th layer). As shown in FIG. 4, the leg portions 40 of the other one of the third segment coils 4c of the parallel coil U2 are inserted into the fifth layer of the slot No. 5 and the sixth layer of the slot No. 12 and form a winding start portion in the fifth layer (2·i + 1-th layer). The parallel coil U3 of the stator coil 3u includes two third segment coils 4c. As shown in FIG. 4, the leg portions 40 of one of the third segment coils 4c of the parallel coil U3 are inserted into the third layer of the slot No. 11 and the fourth layer of the slot No. 18 and form a winding start portion in the third layer (2·i + 1-th layer). As shown in FIG. 4, the leg portions 40 of the other one of the third segment coils 4c of the parallel coil U3 are inserted into the fifth layer of the slot No. 12 and the sixth layer of the slot No. 19 and form a winding start portion in the fifth layer (2·i + 1-th layer). The parallel coil U4 of the stator coil 3u includes two third segment coils 4c. As shown in FIG. 4, the leg portions 40 of one of the third segment coils 4c of the parallel coil U4 are inserted into the third layer of the slot No. 12 and the fourth layer of the slot No. 19 and form a winding start portion in the third layer (2·i + 1-th layer). As shown in FIG. 4, the leg portions 40 of the other one of the third segment coils 4c of the parallel coil U4 are inserted into the fifth layer of the slot No. 11 and the sixth layer of the slot No. 18 and form a winding start portion in the fifth layer (2·i + 1-th layer).

The first to third segment coils 4a, 4b, 4c forming the parallel coils V1 to V4 of the stator coil 3v are mounted so as to be offset by four slots in the circumferential direction (leftward in FIG. 4) with respect to the first to third segment coils 4a, 4b, 4c forming the parallel coils U1 to U4 of the U-phase. The first to third segment coils 4a, 4b, 4c forming the parallel coils W1, W2 of the stator coil 3w are mounted so as to be offset by four slots toward the opposite side from the parallel coils V1, V2 (rightward in FIG. 4) in the circumferential direction with respect to the first to third segment coils 4a, 4b, 4c forming the parallel coils U1, U2 of the U-phase. Further, the first to third segment coils 4a, 4b, 4c forming the parallel coils W3, W4 of the stator coil 3w are mounted so as to be offset by four slots toward the opposite side from the parallel coils U1, U2 (leftward in FIG. 4) in the circumferential direction with respect to the first to third segment coils 4a, 4b, 4c forming the parallel coils V3, V4 of the V-phase.

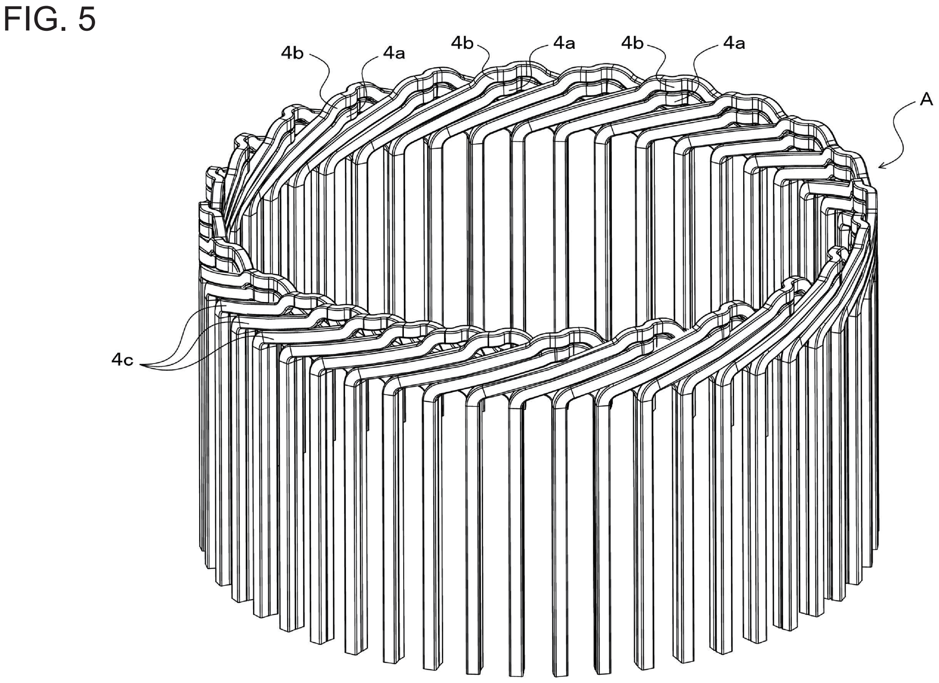

As can be seen from FIG. 4, the inclination directions of the crossover portions 41 (crank portions 42) of the first and second segment coils 4a, 4b with respect to the radial direction of the stator core 2 are the same directions, and the inclination directions of the crossover portions 41 (crank portions 42) of the third segment coils 4c with respect to the radial direction of the stator core 2 are also the same directions as those of the first and second segment coils 4a, 4b. Therefore, the first to third segment coils 4a, 4b, 4c to be wound in the 2·i-1-th layer and the 2·i-th layer, i.e., the first and second layers, the third and fourth layers, and the fifth and sixth layers, of the slots 20 can be arrayed in a circle as shown in FIG. 5 by a commonly known circular array forming device (e.g., see JP 3975891 B).

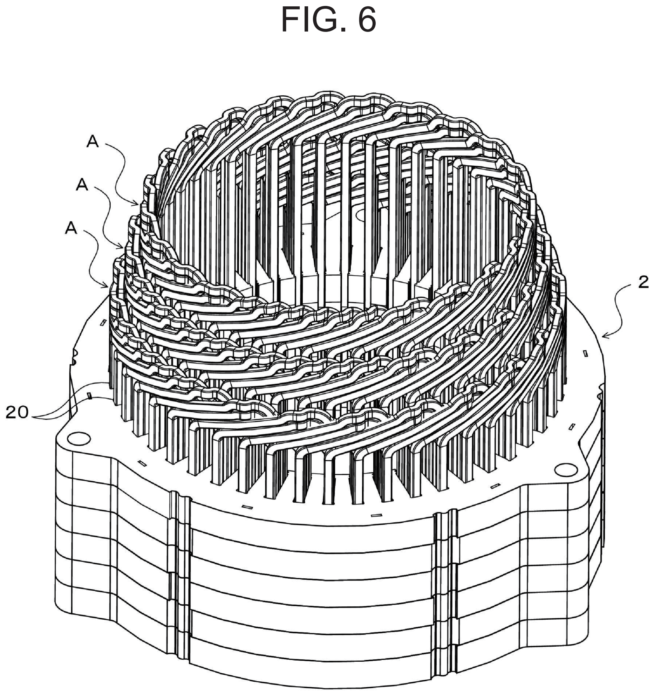

In an assembly A in which the first to third segment coils 4a, 4b, 4c corresponding to two layers are arrayed in a circle, each second segment coil 4b is placed so as to straddle the crossover portion 41 of the corresponding first segment coil 4a, and a plurality of (six) third segment coils 4c is arrayed in the circumferential direction such that the crossover portions 41 overlap one another. As a result, as shown in FIG. 6, three assemblies A (first to third segment coils 4a, 4b, 4c) to be wound in the first and second layers, the third and fourth layers, and the fifth and sixth layers, respectively, can be sequentially mounted onto the stator core 2. As can be seen from FIG. 4 and FIG. 6, in this embodiment, the first and second segment coils 4a, 4b include three types of segment coils that are different from one another in the interval of the leg portions 40 in the circumferential direction etc., and the third segment coils 4c include two types of segment coils that are different from each other in the interval of the leg portions 40 in the circumferential direction etc.

After completion of mounting of the first to third segment coils 4a, 4b, 4c onto the stator core 2, the leg portions 40 of the first to third segment coils 4a, 4b, 4c that protrude from the first end (twisting side) of the stator core 2 are subjected to a twisting process using a twisting device (not shown). In this embodiment, the leg portions 40 of each of the first to third segment coils 4a, 4b, 4c are twisted toward opposite sides (see the broken lines in FIG. 4) so as to be away from each other in the circumferential direction. As can be seen from FIG. 4, the leading end portions of each two of the leg portions 40 of the first and second segment coils 4a, 4b that protrude from the 2·i-th layer of one of the first and second slots 21, 22 spaced five slots apart that lies on the one side (winding start side) in the circumferential direction and from the 2·i-1-th layer of the other one (e.g., the second layer of the slot No. 13 and the first layer of the slot No. 18) are electrically joined together by welding (e.g., laser welding).

Thus, a plurality of crossover portions 45 that each connects the leading end portions of the corresponding two leg portions 40 of the first and second segment coils 4a, 4b is formed on the side of the first end of the stator core 2. As can be seen from FIG. 4, the direction in which each crossover portion 45 straddles the border between the layers on the side of the first end of the stator core 2 (the direction from the 2·i-th layer toward the 2·i-1-th layer) is opposite from the direction in which the crossover portions 41 of the first to third segment coils 4a, 4b, 4c straddle the border between the layers on the side of the second end (opposite from the twisting side) of the stator core 2 (the direction from the 2·i-1-th layer toward the 2·i-th layer). Before the welding, the insulation film is removed from the leading end portion of each leg portion 40 so as to expose the conductor.

As shown in FIG. 4, on the side of the first end of the stator core 2, each two of the leg portions 40 that protrude from the 2·i-th layer of one of the first and second slots 21, 22 spaced five slots apart that lies on the one side (winding start side) in the circumferential direction and from the 2·i+1-th layer of the other one (e.g., the second layer of the slot No. 48 and the third layer of the slot No. 5, and the fourth layer of the slot No. 1 and the fifth layer of the slot No. 6) are twisted and electrically joined together at their leading end portions by welding such that the leg portion 40 of the first or second segment coil 4a or 4b that forms the winding end portion in the 2·i-th layer and the leg portion 40 of the third segment coil 4c that forms the winding start portion in the 2·i+1-th layer are connected to each other. More specifically, on the side of the first end of the stator core 2, the leg portion 40 of the third segment coil 4c that protrudes from the 2·i+1-th layer of one of the predetermined first and second slots 21, 22 (e.g., the slot No. 5 and the slot No. 12, and the slot No. 6 and the slot No. 13 in FIG. 4) that lies on the one side (winding start side) in the circumferential direction (e.g., the third layer of the slot No. 5 or the fifth layer of the slot No. 6 in FIG. 4) and the leg portion 40 of the first or second segment coil 4a or 4b that protrudes from the 2·i-th layer of the slot 20 (e.g., the second layer of the slot No. 48 or the fourth layer of the slot No. 1 in FIG. 4) spaced five slots apart from that one of the predetermined first and second slots 21, 22 (e.g., the slot No. 5 or the slot No. 6 in FIG. 4) are twisted and electrically joined together at their leading end portions.

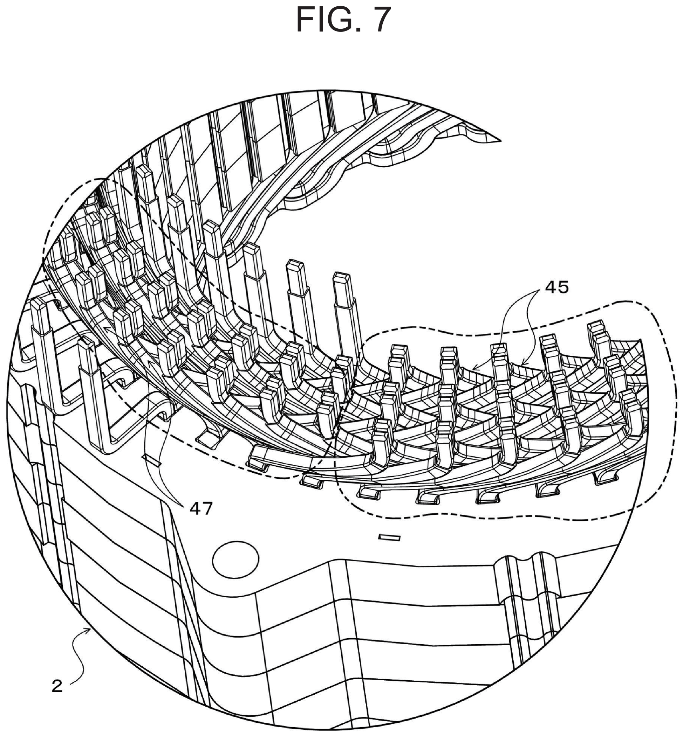

Thus, a plurality of crossover portions 47 that each connects the leg portion 40 of the first or second segment coil 4a or 4b that forms the winding end portion in the 2·i-th layer and the leg portion 40 of the third segment coil 4c that forms the winding start portion in the 2·i+1-th layer to each other is formed on the side of the first end of the stator core 2 (see the area enclosed by the long dashed short dashed line in FIG. 7). As can be seen from FIG. 4, on the side of the first end of the stator core 2, the direction in which each crossover portion 47 straddles the border between the layers (the direction from the 2·i-th layer toward the 2·i+1-th layer) is opposite from the direction in which the other crossover portions 45 (see the area enclosed by the long dashed double-short dashed line in FIG. 7) straddle the border between the layers (the direction from the 2·i-1-th layer toward the 2·i-th layer).

When joining of the leading end portions of the corresponding leg portions 40 has been completed, the first to third segment coils 4a, 4b, 4c have been wound by wave winding in the first layer and the second layer, the third layer and the fourth layer, and the fifth layer and the sixth layer. As shown in FIG. 4, the leg portions 40 that are inserted in the first layers of the slots No. 5 and No. 6 and the sixth layers of the slots No. 6 and No. 7 are used as leader lines Pu1, Pu2, Pu3, Pu4 of the parallel coils U1, U2, U3, and U4, and are electrically connected to a power line of the U-phase through a busbar unit (not shown) on the side of the first end of the stator core 2. Further, as shown in FIG. 4, the leg portions 40 that are inserted in the sixth layers of the slots No. 48 and No. 1 and the first layers of the slots No. 11 and No. 12 are used as neutral lines Nu1, Nu2, Nu3, Nu4 of the parallel coils U1, U2, U3, and U4, and are electrically connected to a neutral point through the busbar unit (not shown) on the side of the first end of the stator core 2.

As shown in FIG. 4, the leg portions 40 that are inserted in the first layers of the slots No. 9 and No. 10 and the sixth layers of the slots No. 10 and No. 11 are used as leader lines Pv1, Pv2, Pv3, Pv4 of the parallel coils V1, V2, V3, and V4, and are electrically connected to a power line of the V-phase through the busbar unit (not shown) on the side of the first end of the stator core 2. Further, as shown in FIG. 4, the leg portions 40 that are inserted in the sixth layers of the slots No. 4 and No. 5 and the first layers of the slots No. 15 and No. 16 are used as neutral lines Nv1, Nv2, Nv3, Nv4 of the parallel coils V1, V2, V3, and V4, and are electrically connected to a neutral point through the busbar unit (not shown) on the side of the first end of the stator core 2. As shown in FIG. 4, the leg portions 40 that are inserted in the first layers of the slots No. 1 and No. 2 and the sixth layers of the slots No. 14 and No. 15 are used as leader lines Pw1, Pw2, Pw3, Pw4 of the parallel coils W1, W2, W3, and W4, and are electrically connected to a power line of the W-phase through the busbar unit (not shown) on the side of the first end of the stator core 2. Further, as shown in FIG. 4, the leg portions 40 that are inserted in the sixth layers of the slots No. 44 and No. 45 and the first layers of the slots No. 19 and No. 20 are used as neutral lines Nw1, Nw2, Nw3, Nw4 of the parallel coils W1, W2, W3, and W4, and are electrically connected to a neutral point through the busbar unit (not shown) on the side of the first end of the stator core 2. Thus, the stator coils 3u, 3v, 3w are wound on the stator core 2 by distributed winding.

In the stator coils 3u, 3v, 3w wound on the stator core 2, joint portions between the leading end portions of the large number of the leg portions 40 are arrayed in predetermined numbers in the radial direction to form an annular first coil end portion that protrudes toward an outer side from an end face of the stator core 2 on the side of the first end (twisting side). As described above, in the stator 1, the corresponding leg portions 40 are joined together at a five-slot pitch on the side of the first end of the stator core 2, which allows this first coil end portion to be shorter in height (the amount of protrusion thereof from the end face of the stator core 2 on the side of the first end to be smaller).

Further, in the stator coils 3u, 3v, 3w, the crossover portions 41 of the first to third segment coils 4a, 4b, 4c form an annular second coil end portion that protrudes toward an outer side from an end face of the stator core 2 on the side of the second end (opposite from the twisting side). In the second coil end portion, the crossover portions 41 of the second segment coils 4b straddle the crossover portions 41 of the first segment coils 4a. As the number of layers of the crossover portions 41 is restricted to two, an increase in the axial length of the stator 1 can be favorably avoided.

As has been described above, the stator 1 includes the first segment coils 4a each having the leg portions 40 that are inserted into two first slots 21 spaced six slots apart, the second segment coils 4b each having the leg portions 40 that are inserted into two second slots 22 lying on each side of the first slots 21 and spaced eight slots apart, and the third segment coils 4c each having the leg portions 40 that are inserted into predetermined first and second slots 21, 22 spaced seven slots apart. The leg portions 40 of each first segment coil 4a are inserted into the 2·i-1-th layer of one of the two first slots 21 that lies on the one side in the circumferential direction and into the 2·i-th layer of the other one so as to protrude from the first end of the stator core 2. The leg portions 40 of each second segment coil 4b are inserted into the 2·i-1-th layer of one of the two second slots 22 that lies on the one side in the circumferential direction and into the 2·i-th layer of the other one so as to protrude from the first end of the stator core 2, and each second segment coil 4b straddles the corresponding first segment coil 4a. The leg portions 40 of each third segment coil 4c are inserted into the 2·i-1-th layer of one of the predetermined first and second slots 21, 22 that lies on the one side in the circumferential direction and into the 2·i -th layer of the other one so as to protrude from the first end of the stator core 2, and each third segment coil 4c forms the winding start portion in the 2·i+1-th layer. On the side of the first end of the stator core 2, each two of leg portions 40 that protrude from the 2·i-th layer of one of the first and second slots 21, 22 spaced five slots apart that lies on the one side in the circumferential direction and from the 2·i-1-th layer of the other one are twisted and joined together at their leading end portions. Further, on the side of the first end of the stator core 2, each two of leg portions 40 that protrude from the 2·i-th layer of one of the first and second slots 21, 22 spaced five slots apart that lies on the one side in the circumferential direction and from the 2·i+1-th layer of the other one are twisted and joined together at their leading end portions such that the winding end portion in the 2·i-th layer and the winding start portion in the 2·i+1-th layer are connected to each other.

Thus, each of the parallel coils U1 to U4, V1 to V4, W1 to W4 is basically formed by inserting each second segment coil 4b into two second slots 22 spaced eight slots apart so as to straddle the first segment coil 4a that is inserted in two first slots 21 spaced six slots apart, and joining the corresponding leg portions 40 together at a five-slot pitch on the side of the first end of the stator core 2. In this way, even when the number of effective turns that is obtained by dividing the number of the leg portions 40 (the number of layers = 6) in one slot 20 by the number of the parallel coils U1 to U4 (parallel number = 4) is not an integer (in this embodiment, 1.5), a circulating current generated due to a deviation in the timing when an inductive voltage is generated in each magnetic pole of the parallel coils U1 to U4, V1 to V4, W1 to W4 as a magnet of the rotor passes can be canceled inside each of the parallel coils U1 to U4, V1 to V4, W1 to W4 to inhibit the circulating current from flowing through the stator coils 3u, 3v, 3w.

Description will be given by taking the parallel coil U1 as an example. In the parallel coil U1, eight magnetic poles are formed. As shown in FIG. 4, in a magnetic pole (winding) formed in the range from the slot No. 5 to the slot No. 13, the leg portions 40 are disposed evenly on both sides of a center of the magnetic pole (see the triangle in FIG. 4) in the circumferential direction (two in each of the slots No. 5 and No. 13, one in each of the slots No. 6 and No. 12). In a magnetic pole formed in the range from the slot No. 17 to the slot No. 25, also, the leg portions 40 are disposed evenly on both sides of a center of the magnetic pole in the circumferential direction (one in each of the slots No. 17 and No. 25, two in each of the slots No. 18 and No. 24). Further, in a magnetic pole formed in the range from the slot No. 29 to the slot No. 37, also, the leg portions 40 are disposed evenly on both sides of a center of the magnetic pole in the circumferential direction (two in each of the slots No. 29 and No. 37, one in each of the slots No. 30 and No. 36). In a magnetic pole formed in the range from the slot No. 41 to the slot No. 1, also, the leg portions 40 are disposed evenly on both sides of a center of the magnetic pole in the circumferential direction (one in each of the slots No. 41 and No. 1, two in each of the slots No. 42 and No. 48). Thus, in these magnetic poles, no deviation occurs in the timing when an inductive voltage is generated as a magnet passes.

On the other hand, in a magnetic pole formed in the range from the slot No. 12 to the slot No. 18, the leg portions 40 are disposed more densely on the other side (the winding end side; the left side in FIG. 4) of a center of the magnetic pole in the circumferential direction (one in each of the slots No. 12 and No. 17, two in each of the slots No. 13 and No. 18). In a magnetic pole formed in the range from the slot No. 36 to the slot No. 42, the leg portions 40 are disposed more densely on the other side of a center of the magnetic pole in the circumferential direction (one in each of the slots No. 36 and No. 41, two in each of the slots No. 37 and No. 42). Accordingly, in these magnetic poles, the timing when an inductive voltage is generated as a magnet passes deviates, for example, toward a retardation side. On the other hand, in a magnetic pole formed in the range from the slot No. 24 to the slot No. 30, the leg portions 40 are disposed more densely on the one side (the winding start side; the right side in FIG. 4) of a center of the magnetic pole in the circumferential direction (two in each of the slots No. 24 and No. 29, one in each of the slots No. 25 and No. 30). Further, in a magnetic pole formed in the range from the slot No. 48 to the slot No. 6, the leg portions 40 are disposed more densely on the one side of a center of the magnetic pole in the circumferential direction (two in each of the slots No. 48 and No. 5, one in each of the slots No. 1 and No. 6). Accordingly, in these magnetic poles, the timing when an inductive voltage is generated as a magnet passes deviates, for example, toward an advance side. Thus, it would be understood that in the parallel coil U1, a circulating current due to a deviation in the timing of generation of an inductive voltage that occurs in the magnetic pole formed in the range from the slot No. 12 to the slot No. 18 and the magnetic pole formed in the range from the slot No. 36 to the slot No. 42, and a circulating current due to a deviation in the timing of generation of an inductive voltage that occurs in the magnetic pole formed in the range from the slot No. 24 to the slot No. 30 and the magnetic pole formed in the range from the slot No. 48 to the slot No. 6 can cancel each other. In the stator 1, as in the parallel coil U1, circulating currents due to the timing of generation of an inductive voltage can be canceled in each of the parallel coils U2 to U4, V1 to V4, W1 to W4.

In the stator 1, the leg portions 40 of the first to third segment coils 4a, 4b, 4c that form one-phase stator coil 3u, 3v, or 3w are inserted into sets of three slots 20 adjacent to one another in the circumferential direction, and each of the stator coils 3u, 3v, 3w is wound on the stator core 2 by short-pitch winding. For example, in the U-phase stator coil 3u, as shown in FIG. 4, the leg portions 40 of the first to third segment coils 4a, 4b, 4c are inserted at a four-slot pitch such that 12 leg portions 40 are inserted into each set of the slots 20 No. 5, No. 6, and No. 7; the slots 20 No. 11, No. 12, and No. 13; the slots 20 No. 17, No. 18, and No. 19; the slots 20 No. 23, No. 24, and No. 25; the slots 20 No. 29, No. 30, and No. 31; the slots 20 No. 35, No. 36, and No. 37; the slots 20 No. 41, No. 42, and No. 43; and the slots 20 No. 47, No. 48, and No. 1. Thus, a rotating electrical machine including the stator 1 can achieve a higher output (power) and a reduction in vibration and noise compared with a rotating electrical machine including a stator in which stator coils are wound on a stator core by full-pitch winding. In addition, the stator 1 can eliminate the need for skew etc., for reducing torque ripple of degree of: degree 6 × the number of pole pairs (e.g., degree 24).

Further, in the stator 1, the inclination direction, with respect to the radial direction of the stator core 2, of each crossover portion 41 (crank portion 42) that connects the leg portions 40 of the third segment coil 4c to each other is the same direction as the first and second segment coils 4a, 4b. This makes it possible to mount the first to third segment coils 4a, 4b, 4c to be wound in the 2·i-1-th layer and the 2·1-th layer onto the stator core 2 after arraying these segment coils in a circle by a commonly known circular array forming device. Thus, the takt time can be shortened, and the cost can be reduced by omitting the use of a multi-axis robot or the like. As a result, even when the number of effective turns is not an integer, the stator 1 can inhibit generation of a circulating current and achieve improved productivity and a lower manufacturing cost.

In the stator 1, on the side of the first end of the stator core 2, the leading end portion of the leg portion 40 of the third segment coil 4c that protrudes from the 2·i+1-th layer of one of the predetermined first and second slots 21, 22 that lies on the one side in the circumferential direction and the leg portion 40 that protrudes from the 2·i-th layer of the slot 20 spaced five slots apart from that one of the predetermined first and second slots 21, 22 are twisted and joined together at their leading end portions to thereby form the crossover portion 47. That is, in the stator 1, the leg portion 40 of the third segment coil 4c that forms the winding start portion in the 2·i+1-th layer and the other leg portion 40 corresponding thereto form the crossover portion 47 that straddles the border between the layers in the opposite direction from the other crossover portions 45. This makes it possible to place each second segment coil 4b in the stator core 2 so as to straddle the corresponding first segment coil 4a, and to join the corresponding leg portions 40 together at a five-slot pitch on the side of the first end of the stator core 2.

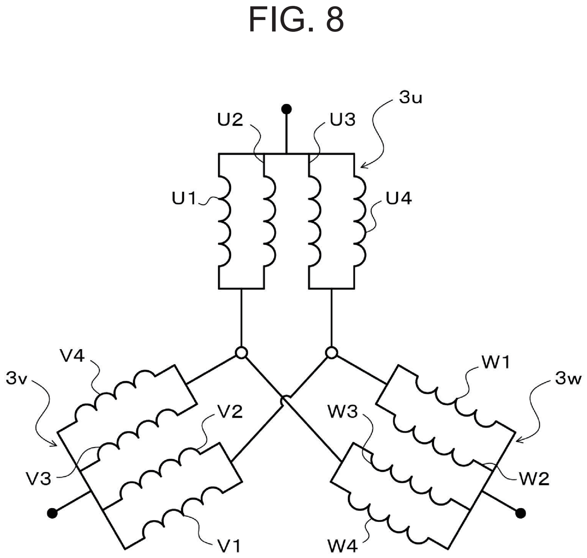

Further, some of the leg portions 40 that protrude from the first end (the end face on the twisting side) of the stator core 2 (see FIG. 1) are used as the leader lines Pu1, Pu2, Pu3, Pu4, Pv1, Pv2, Pv3, Pv4, Pw1, Pw2, Pw3, Pw4, and are connected to the power line of the U-phase, the V-phase, or the W-phase through which electricity is applied. In the stator 1, the stator coils 3u, 3v, 3w are connected in Y-connection, and some of the leg portions 40 that protrude from the first end (the end face on the twisting side) of the stator core 2 (see FIG. 1) are used as the neutral lines Nu1, Nu2, Nu3, Nu4, Nv1, Nv2, Nv3, Nv4, Nw1, Nw2, Nw3, Nw4 that are connected to the neutral point. Thus, the leader lines Pu1 to Pw4 and the neutral lines Nu1 to Nw4 can be concentrated on the side of the first end of the stator core 2, and thereby routing of the power line etc., and the structure of the busbar unit, etc., can be simplified. However, the stator coils 3u, 3v, 3w need not be necessarily connected in Y-connection and may instead be connected in delta connection or open-end connection. Further, the stator coils 3u, 3v, 3w may be composed of the parallel coils U1 to U4, V1 to V4, W1 to W4 connected as shown in FIG. 8.

As can be seen from FIG. 1 and FIG. 4, in the stator 1, the leg portions 40 that are used as the leader line Pu1 etc., and the neutral line Nu1 etc., can be concentrated in a relatively narrow range of the first coil end portion. Thus, in a case where a rotating electrical machine including the stator 1 is cooled by a cooling liquid (cooling oil), the stator 1 can be disposed inside a case etc., such that the leg portions 40 that are used as the leader line Pu1 etc., and the neutral line Nu1 etc., do not become dipped (immersed). As a result, the stator 1 can favorably achieve a reduction in the cost required for insulation of portions of the leader line Pu1 etc., and the neutral line Nu1 etc., where the conductor is exposed. In addition, in the stator 1, the leading end portions of the leg portions 40 that are inserted in the sixth layer on the innermost circumferential side are not joined together, and the leg portions 40 inserted in the sixth layer need not be shifted (projected) toward the shaft center of the center hole 2o. Therefore, the rotor can be mounted into the center hole 2o of the stator core 2 from both the side of the first end and the side of the second end of the stator core 2.

Further, in the stator 1, the number of layers 2·imax in each slot 20 may be an even number larger than 6, and the number of parallel coils in each of the stator coils 3u, 3v, 3w may be any multiple of 4 = 4·m (where "m" is an integer equal to or larger than 1). The combination of the number of layers 2·imax in each slot 20 and the number of parallel coils 4·m in each of the stator coils 3u, 3v, 3w (2·imax, 4·m) is not limited to (6, 4) in the above-described embodiment, and may instead be, for example, one of (10, 4), (14, 4), and (12, 8).

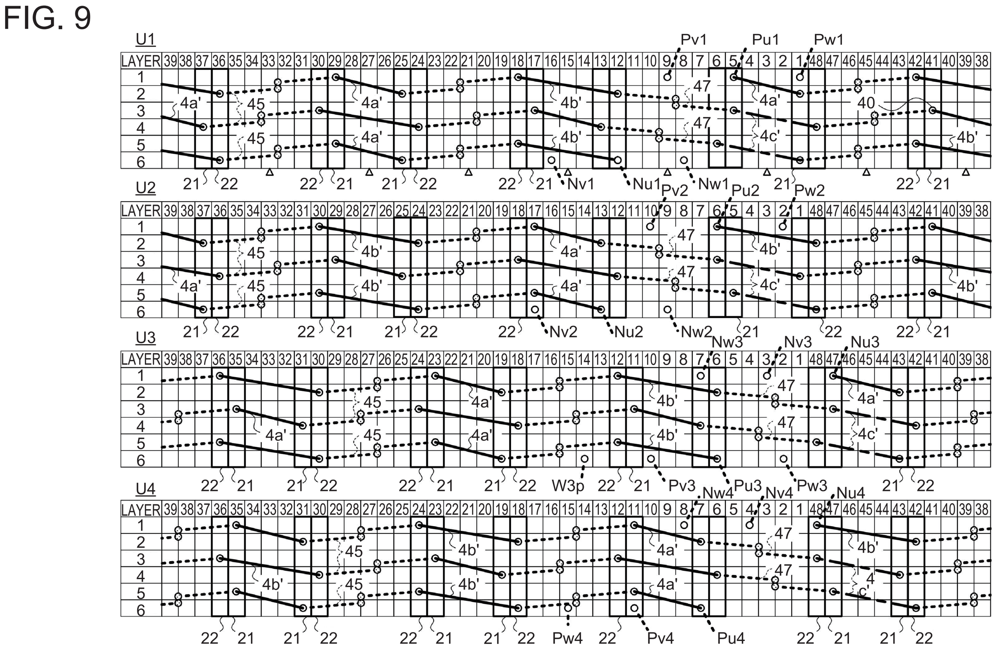

FIG. 9 is an explanatory view illustrating another aspect of mounting of the segment coils 4 onto the stator core 2 of the stator 1 that meets a relationship n = 6·p.

The stator coils 3u, 3v, 3w wound on the stator core 2 in the aspect shown in FIG. 9 are each formed by electrically joining first, second, and third segment coils 4a', 4b', 4c' together. The stator coil 3u includes the four parallel coils U1, U2, U3, and U4 that are electrically connected in parallel. Further, the stator coil 3v includes the four parallel coils V1, V2, V3, and V4 that are electrically connected in parallel to one another, and the stator coil 3w includes the four parallel coils W1, W2, W3, and W4 that are electrically connected in parallel to one another. The parallel coils U1 to U4, V1 to V4, and W1 to W4 are connected to one another in so-called 4Y-connection.

Two leg portions 40 of each of the first to third segment coils 4a', 4b', 4c' are each inserted into a different slot 20 from the side of the second end of the stator core 2 so as to protrude from the first end (the upper end in FIG. 1) of the stator core 2, and crossover portions 41 of the first to third segment coils 4a', 4b', 4c' are arrayed on the side of the second end of the stator core 2. The first to third segment coils 4a', 4b', 4c' are mounted onto the stator core 2 such that an even number of (here, six) leg portions 40 protrude from each of the slots 20 so as to be adjacent to one another in the radial direction. Further, a plurality of layers (in this embodiment, six layers) is each formed by the leg portions 40 that protrude from the respective slots 20 and lie adjacent to one another in the circumferential direction of the stator core 2.

As shown in FIG. 9, the leg portions 40 of each first segment coil 4a' (see the circles in FIG. 9) are inserted into a 2·i-1-th layer (where "i" is an integer equal to or larger than 1 and i = 1, ..., imax (in this embodiment, imax = 3)) of one of two first slots 21 spaced four slots apart that lies on the one side (winding start side) in the circumferential direction and into a 2·i-th layer of the other one from the side of the second end of the stator core 2 (the near side of the sheet plane of FIG. 9) so as to protrude from the first end of the stator core 2 (the far side of the sheet plane of FIG. 9). More specifically, as shown in FIG. 9, the leg portions 40 of the first segment coils 4a' that form the parallel coil U1 of the stator coil 3u are inserted into the first layer of the slot No. 5 and the second layer of the slot No. 1; the first layer of the slot No. 29 and the second layer of the slot No. 25; the third layer of the slot No. 41 and the fourth layer of the slot No. 37; the third layer of the slot No. 17 and the fourth layer of the slot No. 13; and the fifth layer of the slot No. 29 and the sixth layer of the slot No. 25. As shown in FIG. 9, the leg portions 40 of the first segment coils 4a' that form the parallel coil U2 are inserted into the first layer of the slot No. 41 and the second layer of the slot No. 37; the first layer of the slot No. 17 and the second layer of the slot No. 13; the third layer of the slot No. 29 and the fourth layer of the slot No. 25; the fifth layer of the slot No. 41 and the sixth layer of the slot No. 37; and the fifth layer of the slot No. 17 and the sixth layer of the slot No. 13.

Further, as shown in FIG. 9, the leg portions 40 of the first segment coils 4a' that form the parallel coil U3 are inserted into the first layer of the slot No. 47 and the second layer of the slot No. 43; the first layer of the slot No. 23 and the second layer of the slot No. 19; the third layer of the slot No. 35 and the fourth layer of the slot No. 31; the third layer of the slot No. 11 and the fourth layer of the slot No. 7; and the fifth layer of the slot No. 23 and the sixth layer of the slot No. 19. As shown in FIG. 9, the leg portions 40 of the first segment coils 4a' that form the parallel coil U4 are inserted into the first layer of the slot No. 35 and the second layer of the slot No. 31; the first layer of the slot No. 11 and the second layer of the slot No. 7; the third layer of the slot No. 23 and the fourth layer of the slot No. 19; the fifth layer of the slot No. 35 and the sixth layer of the slot No. 31; and the fifth layer of the slot No. 11 and the sixth layer of the slot No. 7.

The leg portions 40 of each second segment coil 4b' (see the circles in FIG. 9) are inserted into a 2·i-1-th layer of one of two second slots 22 lying on each side of the first slots 21 and spaced six slots apart that lies on the one side (winding start side) in the circumferential direction and into a 2·i-th layer of the other one from the side of the second end of the stator core 2 so as to protrude from the first end of the stator core 2, and the crossover portion (not shown) of each second segment coil 4b' straddles the crossover portion (not shown) of the corresponding first segment coil 4a'. More specifically, as shown in FIG. 9, the leg portions 40 of the second segment coils 4b' that form the parallel coil U1 of the stator coil 3u are inserted into the first layer of the slot No. 42 and the second layer of the slot No. 36; the first layer of the slot No. 18 and the second layer of the slot No. 12; the third layer of the slot No. 30 and the fourth layer of the slot No. 24; the fifth layer of the slot No. 42 and the sixth layer of the slot No. 36; and the fifth layer of the slot No. 18 and the sixth layer of the slot No. 12. As shown in FIG. 9, the leg portions 40 of the second segment coils 4b' that form the parallel coil U2 are inserted into the first layer of the slot No. 6 and the second layer of the slot No. 48; the first layer of the slot No. 30 and the second layer of the slot No. 24; the third layer of the slot No. 42 and the fourth layer of the slot No. 36; the third layer of the slot No. 18 and the fourth layer of the slot No. 12; and the fifth layer of the slot No. 30 and the sixth layer of the slot No. 24.

Further, as shown in FIG. 9, the leg portions 40 of the second segment coils 4b' that form the parallel coil U3 are inserted into the first layer of the slot No. 36 and the second layer of the slot No. 30; the first layer of the slot No. 12 and the second layer of the slot No. 6; the third layer of the slot No. 24 and the fourth layer of the slot No. 18; the fifth layer of the slot No. 36 and the sixth layer of the slot No. 30; and the fifth layer of the slot No. 12 and the sixth layer of the slot No. 6. As shown in FIG. 9, the leg portions 40 of the second segment coils 4b' that form the parallel coil U4 are inserted into the first layer of the slot No. 48 and the second layer of the slot No. 42; the first layer of the slot No. 24 and the second layer of the slot No. 18; the third layer of the slot No. 36 and the fourth layer of the slot No. 30; the third layer of the slot No. 12 and the fourth layer of the slot No. 6; and the fifth layer of the slot No. 24 and the sixth layer of the slot No. 18.

The leg portions 40 of each third segment coil 4c' (see the circles in FIG. 9) are inserted into a 2·i + 1 (= 2·(i + 1)-1)-th layer of one of predetermined first and second slots 21, 22 spaced five slots apart that lies on the one side (winding start side) in the circumferential direction and into a 2·(i + 1)-th layer of the other one from the side of the second end of the stator core 2 so as to protrude from the first end of the stator core 2, and one of the leg portions 40 forms a winding start portion in the 2·i+1-th layer. That is, the parallel coil U1 of the stator coil 3u includes two third segment coils 4c'. As shown in FIG. 9, the leg portions 40 of one of the third segment coils 4c' of the parallel coil U1 are inserted into the third layer of the slot No. 5 and the fourth layer of the slot No. 48 and form a winding start portion in the third layer (2·i+1-th layer). As shown in FIG. 9, the leg portions 40 of the other one of the third segment coils 4c' of the parallel coil U1 are inserted into the fifth layer of the slot No. 6 and the sixth layer of the slot No. 1 and form a winding start portion in the fifth layer (2·i+1-th layer). The parallel coil U2 of the stator coil 3u includes two third segment coils 4c'. As shown in FIG. 9, the leg portions 40 of one of the third segment coils 4c' of the parallel coil U2 are inserted into the third layer of the slot No. 6 and the fourth layer of the slot No. 1 and form a winding start portion in the third layer (2·i+1-th layer). As shown in FIG. 9, the leg portions 40 of the other one of the third segment coils 4c' of the parallel coil U2 are inserted into the fifth layer of the slot No. 5 and the sixth layer of the slot No. 48 and form a winding start portion in the fifth layer (2·i+1-th layer).

The parallel coil U3 of the stator coil 3u includes two third segment coils 4c'. As shown in FIG. 9, the leg portions 40 of one of the third segment coils 4c' of the parallel coil U3 are inserted into the third layer of the slot No. 47 and the fourth layer of the slot No. 42 and form a winding start portion in the third layer (2·i+1-th layer). As shown in FIG. 9, the leg portions 40 of the other one of the third segment coils 4c' of the parallel coil U3 are inserted into the fifth layer of the slot No. 48 and the sixth layer of the slot No. 43 and form a winding start portion in the fifth layer (2·i+1-th layer). The parallel coil U4 of the stator coil 3u includes two third segment coils 4c'. As shown in FIG. 9, the leg portions 40 of one of the third segment coils 4c' of the parallel coil U4 are inserted into the third layer of the slot No. 48 and the fourth layer of the slot No. 43 and form a winding start portion in the third layer (2·i+1-th layer). As shown in FIG. 9, the leg portions 40 of the other one of the third segment coils 4c' of the parallel coil U4 are inserted into the fifth layer of the slot No. 47 and the sixth layer of the slot No. 42 and form a winding start portion in the fifth layer (2·i+1-th layer).

The first to third segment coils 4a', 4b', 4c' forming the parallel coils V1 to V4 of the stator coil 3v are mounted so as to be offset by four slots in the circumferential direction (leftward in FIG. 9) with respect to the first to third segment coils 4a', 4b', 4c' forming the parallel coils U1 to U4 of the U-phase. The first to third segment coils 4a', 4b', 4c' forming the parallel coils W1, W2 of the stator coil 3w are mounted so as to be offset by four slots toward the opposite side from the parallel coils V1, V2 (rightward in FIG. 9) in the circumferential direction with respect to the first to third segment coils 4a', 4b', 4c' forming the parallel coils U1, U2 of the U-phase. Further, the first to third segment coils 4a', 4b', 4c' forming the parallel coils W3, W4 of the stator coil 3w are mounted so as to be offset by four slots toward the opposite side from the parallel coils U1, U2 (leftward in FIG. 9) in the circumferential direction with respect to the first to third segment coils 4a', 4b', 4c' forming the parallel coils V3, V4 of the V-phase.

As can be seen from FIG. 9, the inclination directions of the crossover portions 41 (crank portions 42) of the first and second segment coils 4a', 4b' with respect to the radial direction of the stator core 2 are the same directions, and the inclination directions of the crossover portions 41 (crank portions 42) of the third segment coils 4c' with respect to the radial direction of the stator core 2 are also the same directions as those of the first and second segment coils 4a', 4b'. Therefore, the first to third segment coils 4a', 4b', 4c' to be wound in the 2·i-1-th layer and the 2·i-th layer, i.e., the first and second layers, the third and fourth layers, and the fifth and sixth layers, of the slots 20 can be arrayed in a circle by a commonly known circular array forming device (e.g., see JP 3975891 B) (see FIG. 5). As a result, three assemblies (first to third segment coils 4a', 4b', 4c') to be wound in the first and second layers, the third and fourth layers, and the fifth and sixth layers, respectively, can be sequentially mounted onto the stator core 2. The first and second segment coils 4a', 4b' also include three types of segment coils that are different from one another in the interval of the leg portions 40 in the circumferential direction etc., and the third segment coils 4c' also include two types of segment coils that are different from each other in the interval of the leg portions 40 in the circumferential direction etc.

After completion of mounting of the first to third segment coils 4a', 4b', 4c' onto the stator core 2, the leg portions 40 of each of the first to third segment coils 4a', 4b', 4c' are twisted toward opposite sides (see the broken lines in FIG. 9) so as to be away from each other in the circumferential direction. As can be seen from FIG. 9, the leading end portions of each two of the leg portions 40 of the first and second segment coils 4a', 4b' that protrude from the 2·i-th layer of one of the first and second slots 21, 22 spaced seven slots apart that lies on the one side (winding start side) in the circumferential direction and from the 2·i-1-th layer of the other one (e.g., the second layer of the slot No. 1 and the first layer of the slot No. 42) are electrically joined together by welding (e.g., laser welding). Thus, the crossover portions 45 that each connect the leading end portions of the corresponding two leg portions 40 of the first and second segment coils 4a', 4b' are formed on the side of the first end of the stator core 2. As can be seen from FIG. 9, the direction in which each crossover portion 45 straddles the border between the layers on the side of the first end of the stator core 2 (the direction from the 2·i-th layer toward the 2·i-1-th layer) is opposite from the direction in which the crossover portions 41 of the first to third segment coils 4a', 4b', 4c' straddle the border between the layers on the side of the second end of the stator core 2 (the direction from the 2·i-1-th layer toward the 2·i-th layer).

As shown in FIG. 9, on the side of the first end of the stator core 2, each two of the leg portions 40 that protrude from the 2·i-th layer of one of the first and second slots 21, 22 spaced seven slots apart that lies on the one side (winding start side) in the circumferential direction and from the 2·i+1-th layer of the other one (e.g., the second layer of the slot No. 12 and the third layer of the slot No. 5, and the fourth layer of the slot No. 13 and the fifth layer of the slot No. 6) are twisted and electrically joined together at their leading end portions by welding such that the leg portion 40 of the first or second segment coil 4a' or 4b' that forms the winding end portion in the 2·i-th layer and the leg portion 40 of the third segment coil 4c' that forms the winding start portion in the 2·i+1-th layer are connected to each other. More specifically, on the side of the first end of the stator core 2, the leg portion 40 of the third segment coil 4c' that protrudes from the 2·i+1-th layer of one of the predetermined first and second slots 21, 22 (e.g., the slot No. 5 and the slot No. 48, or the slot No. 6 and the slot No. 1 in FIG. 9) that lies on the one side (winding start side) in the circumferential direction (e.g., the third layer of the slot No. 5 or the fifth layer of the slot No. 6 in FIG. 9) and the leg portion 40 of the first or second segment coil 4a' or 4b' that protrudes from the 2·i-th layer of the slot 20 (e.g., the second layer of the slot No. 12 or the fourth layer of the slot No. 13 in FIG. 9) spaced seven slots apart from that one of the predetermined first and second slots 21, 22 (e.g., the slot No. 5 or the slot No. 6 in FIG. 9) are twisted and electrically joined together at their leading end portions.

Thus, the crossover portions 47 that each connect the leg portion 40 of the first or second segment coil 4a' or 4b' that forms the winding end portion in the 2·i-th layer and the leg portion 40 of the third segment coil 4c' that forms the winding start portion in the 2·i+1-th layer to each other is formed on the side of the first end of the stator core 2 (see the area enclosed by the long dashed short dashed line in FIG. 7). As can be seen from FIG. 9, the direction in which each crossover portion 47 straddles the border between the layers on the side of the first end of the stator core 2 (the direction from the 2·i-th layer toward the 2·i+1-th layer) is opposite from the direction in which the other crossover portions 45 (see the area enclosed by the long dashed double-short dashed line in FIG. 7) straddle the border between the layers (the direction from the 2·i-1-th layer toward the 2·i-th layer).

When joining of the leading end portions of the corresponding leg portions 40 has been completed, the first to third segment coils 4a', 4b', 4c' have been wound by wave winding in the first layer and the second layer, the third layer and the fourth layer, and the fifth layer and the sixth layer. As shown in FIG. 9, the leg portions 40 that are inserted in the first layers of the slots No. 5 and No. 6 and the sixth layers of the slots No. 6 and No. 7 are used as the leader lines Pu1, Pu2, Pu3, Pu4 of the parallel coils U1, U2, U3, and U4, and are electrically connected to the power line of the U-phase through the busbar unit (not shown) on the side of the first end of the stator core 2. Further, as shown in FIG. 9, the leg portions 40 that are inserted in the sixth layers of the slots No. 12 and No. 13 and the first layers of the slots No. 47 and No. 48 are used as the neutral lines Nu1, Nu2, Nu3, Nu4 of the parallel coils U1, U2, U3, and U4, and are electrically connected to the neutral point through the busbar unit (not shown) on the side of the first end of the stator core 2.

As shown in FIG. 9, the leg portions 40 that are inserted in the first layers of the slots No. 9 and No. 10 and the sixth layers of the slots No. 10 and No. 11 are used as the leader lines Pv1, Pv2, Pv3, Pv4 of the parallel coils V1, V2, V3, and V4, and are electrically connected to the power line of the V-phase through the busbar unit (not shown) on the side of the first end of the stator core 2. Further, as shown in FIG. 9, the leg portions 40 that are inserted in the sixth layers of the slots No. 16 and No. 17 and the first layers of the slots No. 3 and No. 4 are used as the neutral lines Nv1, Nv2, Nv3, Nv4 of the parallel coils V1, V2, V3, and V4, and are electrically connected to the neutral point through the busbar unit (not shown) on the side of the first end of the stator core 2. As shown in FIG. 9, the leg portions 40 that are inserted in the first layers of the slots No. 1 and No. 2 and the sixth layers of the slots No. 14 and No. 15 are used as the leader lines Pw1, Pw2, Pw3, Pw4 of the parallel coils W1, W2, W3, and W4, and are electrically connected to the power line of the W-phase through the busbar unit (not shown) on the side of the first end of the stator core 2. Further, as shown in FIG. 9, the leg portions 40 that are inserted in the sixth layers of the slots No. 8 and No. 9 and the first layers of the slots No. 7 and No. 8 are used as the neutral lines Nw1, Nw2, Nw3, Nw4 of the parallel coils W1, W2, W3, and W4, and are electrically connected to the neutral point through the busbar unit (not shown) on the side of the first end of the stator core 2. Thus, the stator coils 3u, 3v, 3w are wound on the stator core 2 by distributed winding.

In the stator coils 3u, 3v, 3w wound on the stator core 2 in the aspect shown in FIG. 9, joint portions between the leading end portions of the large number of leg portions 40 are arrayed in predetermined numbers in the radial direction to form an annular first coil end portion that protrudes from the end face of the stator core 2 on the side of the first end (twisting side) toward the outer side. In the stator coils 3u, 3v, 3w wound on the stator core 2 in the aspect shown in FIG. 9, the crossover portions 41 of the first to third segment coils 4a', 4b', 4c' form an annular second coil end portion that protrudes from the end face of the stator core 2 on the side of the second end (opposite from the twisting side) toward the outer side. In the second coil end portion, the crossover portions 41 of the second segment coils 4b' straddle the crossover portions 41 of the first segment coils 4a'. As the number of layers of the crossover portions 41 is restricted to two, an increase in the axial length of the stator 1 that adopts the aspect shown in FIG. 9 can be favorably avoided.

As has been described above, the stator 1 that adopts the aspect shown in FIG. 9 includes the first segment coils 4a' each having the leg portions 40 that are inserted into two first slots 21 spaced four slots apart, the second segment coils 4b' each having the leg portions 40 that are inserted into two second slots 22 lying on each side of the first slots 21 and spaced six slots apart, and the third segment coils 4c' each having the leg portions 40 that are inserted into predetermined first and second slots 21, 22 spaced five slots apart. The leg portions 40 of each first segment coil 4a' are inserted into the 2·i-1-th layer of one of the two first slots 21 that lies on the one side in the circumferential direction and into the 2·i-th layer of the other one so as to protrude from the first end of the stator core 2. The leg portions 40 of each second segment coil 4b' are inserted into the 2·i-1-th layer of one of the two second slots 22 that lies on the one side in the circumferential direction and into the 2·i-th layer of the other one so as to protrude from the first end of the stator core 2, and each second segment coil 4b' straddles the corresponding first segment coil 4a'. The leg portions 40 of each third segment coil 4c' are inserted into the 2·i-1-th layer of one of predetermined first and second slots 21, 22 that lies on the one side in the circumferential direction and into the 2·i-th layer of the other one and form the winding start portion in the 2·i+1-th layer. On the side of the first end of the stator core 2, each two of leg portions 40 that protrude from the 2·i-th layer of one of the first and second slots 21, 22 spaced seven slots apart that lies on the one side in the circumferential direction and from the 2·i-1-th layer of the other one are twisted and joined together at their leading end portions. Further, on the side of the first end of the stator core 2, each two of leg portions 40 that protrude from the 2·i-th layer of one of the first and second slots 21, 22 spaced seven slots apart that lies on the one side in the circumferential direction and from the 2·i+1-th layer of the other one are twisted and joined together at their leading end portions such that the winding end portion in the 2·i-th layer and the winding start portion in the 2·i+1-th layer are connected to each other.

Thus, each of the parallel coils U1 to U4, V1 to V4, W1 to W4 shown in FIG. 9 is basically formed by inserting each second segment coil 4b' into two second slots 22 spaced six slots apart so as to straddle the first segment coil 4a' that is inserted in two first slots 21 spaced four slots apart, and joining the corresponding leg portions 40 together at a seven-slot pitch on the side of the first end of the stator core 2. In this way, even when the number of effective turns that is obtained by dividing the number of the leg portions 40 (the number of layers = 6) in one slot 20 by the number of the parallel coils U1 to U4 (parallel number = 4) is not an integer (in this embodiment, 1.5), a circulating current generated due to a deviation in the timing when an inductive voltage is generated in each magnetic pole of the parallel coils U1 to U4, V1 to V4, W1 to W4 as a magnet of the rotor passes can be canceled inside each of the parallel coils U1 to U4, V1 to V4, W1 to W4 to inhibit the circulating current from flowing through the stator coils 3u, 3v, 3w.

Description will be given by taking the parallel coil U1 as an example. In the parallel coil U1, eight magnetic poles are formed. As shown in FIG. 9, in a magnetic pole (winding) formed in the range from the slot No. 6 to the slot No. 48, the leg portions 40 are disposed evenly on both sides of a center of the magnetic pole (see the triangle in FIG. 9) in the circumferential direction (one in each of the slots No. 6 and No. 48, two in each of the slots No. 5 and No. 1). In a magnetic pole formed in the range from the slot No. 42 to the slot No. 36, also, the leg portions 40 are disposed evenly on both sides of a center of the magnetic pole in the circumferential direction (two in each of the slots No. 42 and No. 36, one in each of the slots No. 41 and No. 37). Further, in a magnetic pole formed in the range from the slot No. 30 to the slot No. 24, also, the leg portions 40 are disposed evenly on both sides of a center of the magnetic pole in the circumferential direction (one in each of the slots No. 30 and No. 24, two in each of the slots No. 29 and No. 25). In a magnetic pole formed in the range from the slot No. 18 to the slot No. 12, also, the leg portions 40 are disposed evenly on both sides of a center of the magnetic pole in the circumferential direction (two in each of the slots No. 18 and No. 12, one in each of the slots No. 17 and No. 13). Thus, in these magnetic poles, no deviation occurs in the timing when an inductive voltage is generated as a magnet passes.

On the other hand, in a magnetic pole formed in the range from the slot No. 1 to the slot No. 41, the leg portions 40 are disposed more densely on the one side (the winding start side; the left side in FIG. 9) of a center of the magnetic pole in the circumferential direction (two in each of the slots No. 1 and No. 42, one in each of the slots No. 48 and No. 41). In a magnetic pole formed in the range from the slot No. 25 to the slot No. 17, the leg portions 40 are disposed more densely on the one side of a center of the magnetic pole in the circumferential direction (two in each of the slots No. 25 and No. 18, one in each of the slots No. 24 and No. 17). Accordingly, in these magnetic poles, the timing when an inductive voltage is generated as a magnet passes deviates, for example, toward a retardation side. On the other hand, in a magnetic pole formed in the range from the slot No. 37 to the slot No. 29, the leg portions 40 are disposed more densely on the other side (the winding end side; the right side in FIG. 9) of a center of the magnetic pole in the circumferential direction (one in each of the slots No. 37 and No. 30, two in each of the slots No. 36 and No. 29). Further, in a magnetic pole formed in the range from the slot No. 13 to the slot No. 5, the leg portions 40 are disposed more densely on the other side of a center of the magnetic pole in the circumferential direction (one in each of the slots No. 13 and No. 6, two in each of the slots No. 12 and No. 5). Accordingly, in these magnetic poles, the timing when an inductive voltage is generated as a magnet passes deviates, for example, toward an advance side. Thus, it would be understood that in the parallel coil U1, a circulating current due to a deviation in the timing of generation of an inductive voltage that occurs in the magnetic pole formed in the range from the slot No. 1 to the slot No. 41 and the magnetic pole formed in the range from the slot No. 25 to the slot No. 17, and a circulating current due to a deviation in the timing of generation of an inductive voltage that occurs in the magnetic pole formed in the range from the slot No. 37 to the slot No. 29 and the magnetic pole formed in the range from the slot No. 13 to the slot No. 5 can cancel each other. In the aspect shown in FIG. 9, as in the parallel coil U1, circulating currents due to the timing of generation of an inductive voltage can be canceled in each of the parallel coils U2 to U4, V1 to V4, W1 to W4.

In the stator 1 that adopts the aspect shown in FIG. 9, the leg portions 40 of the first to third segment coils 4a', 4b', 4c' that form the one-phase stator coil 3u, 3v, or 3w are inserted into sets of three slots 20 adjacent to one another in the circumferential direction, and each of the stator coils 3u, 3v, 3w is wound on the stator core 2 by short-pitch winding. For example, in the U-phase stator coil 3u, as shown in FIG. 9, the leg portions 40 of the first to third segment coils 4a, 4b, 4c are inserted at a four-slot pitch such that 12 leg portions 40 are inserted into each set of the slots 20 No. 7, No. 6, and No. 5; the slots 20 No. 1, No. 48, and No. 47; the slots 20 No. 43, No. 42, and No. 41; the slots 20 No. 37, No. 36, and No. 35; the slots 20 No. 31, No. 30, and No. 29; the slots 20 No. 25, No. 24, and No. 23; the slots 20 No. 19, No. 18, and No. 17; and the slots 20 No. 13, No. 12, and No. 11. Thus, a rotating electrical machine including the stator 1 that adopts the aspect shown in FIG. 9 can achieve a higher output (power) and a reduction in vibration and noise compared with a rotating electrical machine including a stator in which stator coils are wound on a stator core by full-pitch winding. In addition, the aspect shown in FIG. 9 can eliminate the need for skew etc., for reducing torque ripple of degree of: degree 6 × the number of pole pairs (e.g., degree 24).

Further, in the stator 1 that adopts the aspect shown in FIG. 9, the inclination direction, with respect to the radial direction of the stator core 2, of each crossover portion 41 (crank portion 42) that connects the leg portions 40 of the third segment coil 4c' to each other are the same direction as that of the first and second segment coils 4a', 4b'. This makes it possible to mount the first to third segment coils 4a', 4b', 4c' to be wound in the 2·i-1-th layer and the 2·1-th layer onto the stator core 2 after arraying these segment coils in a circle by a commonly known circular array forming device. Thus, the takt time can be shortened, and the cost can be reduced by omitting the use of a multi-axis robot or the like. As a result, even when the number of effective turns is not an integer, the stator 1 can inhibit generation of a circulating current and achieve improved productivity and a lower manufacturing cost.

In the stator 1 that adopts the aspect shown in FIG. 9, on the side of the first end of the stator core 2, the leading end portion of the leg portion 40 of the third segment coil 4c' that protrudes from the 2·i+1-th layer of one of the predetermined first and second slots 21, 22 that lies on the one side in the circumferential direction and the leg portion 40 that protrudes from the 2·i-th layer of the slot 20 spaced seven slots apart from that one of the predetermined first and second slots 21, 22 are twisted and joined together at their leading end portions to thereby form the crossover portion 47. That is, in the stator 1, the leg portion 40 of the third segment coil 4c' that forms the winding start portion in the 2·i+1-th layer and the other leg portion 40 corresponding thereto form the crossover portion 47 that straddles the border between the layers in the opposite direction from the other crossover portions 45. This makes it possible to place each second segment coil 4b' in the stator core 2 so as to straddle the corresponding first segment coil 4a', and to join the corresponding leg portions 40 together at a seven-slot pitch on the side of the first end of the stator core 2.

Further, some of the leg portions 40 that protrude from the first end (the end face on the twisting side) of the stator core 2 are used as the leader lines Pu1, Pu2, Pu3, Pu4, Pv1, Pv2, Pv3, Pv4, Pw1, Pw2, Pw3, Pw4, and are connected to the power line of the U-phase, the V-phase, or the W-phase through which electricity is applied. In the stator 1 that adopts the aspect shown in FIG. 9, the stator coils 3u, 3v, 3w are connected in Y-connection, and some of the leg portions 40 that protrude from the first end (the end face on the twisting side) of the stator core 2 are used as the neutral lines Nu1, Nu2, Nu3, Nu4, Nv1, Nv2, Nv3, Nv4, Nw1, Nw2, Nw3, Nw4 that are connected to the neutral point. Thus, the leader lines Pu1 to Pw4 and the neutral lines Nu1 to Nw4 can be concentrated on the side of the first end of the stator core 2, and thereby routing of the power line etc., and the structure of the busbar unit, etc., can be simplified. However, in the stator 1 that adopts the aspect shown in FIG. 9, the stator coils 3u, 3v, 3w need not be necessarily connected in Y-connection and may instead be connected in delta connection or open-end connection, and may be composed of the parallel coils U1 to U4, V1 to V4, W1 to W4 connected as shown in FIG. 8.

In the aspect shown in FIG. 9, also, the leg portions 40 that are used as the leader line Pu1 etc., and the neutral line Nu1 etc., can be concentrated in a relatively narrow range of the first coil end portion. Thus, in a case where a rotating electrical machine including the stator 1 is cooled by a cooling liquid (cooling oil), the stator 1 can be disposed inside a case etc., such that the leg portions 40 that are used as the leader line Pu1 etc., and the neutral line Nu1 etc., do not become dipped (immersed). As a result, the cost required for insulation of portions of the leader line Pu1 etc., and the neutral line Nu1 etc., where the conductor is exposed can be favorably reduced. In addition, also in the aspect shown in FIG. 9, the leading end portions of the leg portions 40 that are inserted in the sixth layer on the innermost circumferential side are not joined together, and the leg portions 40 etc., inserted into the sixth layer need not be shifted (projected) toward the shaft center of the center hole 2o. Therefore, the rotor can be mounted into the center hole 2o of the stator core 2 from both the side of the first end and the side of the second end of the stator core 2. Further, in the aspect shown in FIG. 9, each second segment coil 4b' is inserted into two second slots 22 spaced six slots apart so as to straddle the first segment coil 4a' that is inserted in two first slots 21 spaced four slots apart, which allows the second coil end portion to be even shorter in height (the amount of protrusion thereof from the end face of the stator core 2 on the side of the second end to be smaller).

In the stator 1 that adopts the aspect shown in FIG. 9, the number of layers 2·imax in each slot 20 may be an even number larger than 6, and the number of parallel coils in each of the stator coils 3u, 3v, 3w may be any multiple of 4 = 4·m (where "m" is an integer equal to or larger than 1). The combination of the number of layers 2·imax in each slot 20 and the number of parallel coils 4·m in each of the stator coils 3u, 3v, 3w (2·imax, 4·m) is not limited to (6, 4) in the above-described embodiment, and may instead be, for example, one of (10, 4), (14, 4), and (12, 8).

It goes without saying that the invention of the present disclosure is in no way limited to the above-described embodiment and that various changes can be made within an extensional scope of the present disclosure. Further, the above-described embodiment is merely one specific form of the invention described in the section SUMMARY OF THE INVENTION, and is not intended to limit the elements of the invention described in the section SUMMARY OF THE INVENTION.

The invention of the present disclosure can be used in the stator manufacturing industry etc.

## Claims

1. A stator (1) comprising:
a stator core (2) including a plurality of slots (20) formed at intervals in a circumferential direction so as to each extend in a radial direction; and
a plurality of segment coils (4) each of which has a pair of leg portions each inserted into a different one of the slots (20), the segment coils (4) forming a plurality of stator coils (3u, 3v, 3w) by electrically joining leading end portions of each pair of corresponding leg portions of the segment coils (4), wherein
n = 6·p is met, where p is the number of poles and n is the number of the slots (20),
the stator coils (3u, 3v, 3w) each include 4·m parallel coils that are connected in parallel, where m is an integer equal to or larger than 1,
an even number of the leg portions are inserted into each of the slots (20) in a row in the radial direction,
the segment coils (4) include a first segment coil (4a, 4a'), a second segment coil (4b, 4b'), and a third segment coil (4c, 4c'),
the leg portions of the first segment coil (4a, 4a') being inserted into a 2·i-1-th layer of one of two first slots (21) spaced six slots apart that lies on one side in the circumferential direction and into a 2·i-th layer of the other one of the two first slots (21) such that the leg portions protrude from a first end of the stator core (2), where i is an integer equal to or larger than 1 and i = 1, ..., imax,
the leg portions of the second segment coil (4b, 4b') being inserted into a 2·i-1-th layer of one of two second slots (22) lying on each side of the two first slots (21) and spaced eight slots apart that lies on the one side in the circumferential direction and into a 2·i-th layer of the other one of the two second slots (22) such that the leg portions protrude from the first end of the stator core (2), and the second segment coil (4b, 4b') straddling a corresponding first segment coil (4a; 4a'), and
the leg portions of the third segment coil (4c, 4c') being inserted into a 2·i-1-th layer of one of predetermined first slot (21) and second slot (22) spaced seven slots apart that lies on the one side in the circumferential direction and into a 2·i-th layer of the other one of the predetermined first slot (21) and second slot (22) such that the leg portions protrude from the first end of the stator core (2), and the third segment coil (4c, 4c') forming a winding start portion in a 2·i+1-th layer, and
on a side of the first end of the stator core (2),
each two of the leg portions that protrude from the 2·i-th layer of one of a first set including a first slot (21) and a second slot (22) spaced five slots apart that lies on the one side in the circumferential direction and from the 2·i-1-th layer of the other one of the first set are twisted and joined together at leading end portions, and
each two of the leg portions that protrude from the 2·i-th layer of one of a second set including a first slot (21) and a second slot (22) spaced five slots apart that lies on the one side in the circumferential direction and from the 2·i+1-th layer of the other one of the second set are twisted and joined together at leading end portions such that a winding end portion of the 2·i-th layer and the winding start portion of the 2·i+1-th layer are connected to each other.

2. The stator (1) according to claim 1, wherein, on the side of the first end of the stator core (2), a leading end portion of one of the leg portions of the third segment coil (4c, 4c') that protrudes from the 2·i+1-th layer of one of the predetermined first slot (21) and second slot (22) that lies on the one side in the circumferential direction and a leg portion that protrudes from the 2·i-th layer of one of the slots (20) spaced five slots apart from that one of the predetermined first slot (21) and second slot (22) that lies on the one side are twisted and joined together at leading end portions.

3. The stator (1) according to claim 1 or 2, wherein one or a plurality of the leg portions that protrude from the first end of the stator core (2) are connected to a power line through which electricity is applied.

4. The stator (1) according to claim 3, wherein
the stator coils (3u, 3v, 3w) are connected in Y-connection, and
one or a plurality of the leg portions that protrude from the first end of the stator core (2) are connected to a neutral point.

5. The stator (1) according to claim 1 or 2, wherein a combination (2·imax, 4·m) of 2·imax that is the number of layers in each of the slots (20) and 4·m that is the number of the parallel coils is one of (6, 4), (10, 4), (14, 4), and (12, 8).

6. A stator (1) comprising:
a stator core (2) including a plurality of slots (20) formed at intervals in a circumferential direction so as to each extend in a radial direction; and
a plurality of segment coils (4) each of which has a pair of leg portions each inserted into a different one of the slots (20), the segment coils (4) forming a plurality of stator coils (3u, 3v, 3w) by electrically joining leading end portions of each pair of corresponding leg portions of the segment coils (4), wherein
n = 6·p is met, where p is the number of poles and n is the number of the slots (20);
the stator coils (3u, 3v, 3w) each include 4·m parallel coils that are connected in parallel, where m is an integer equal to or larger than 1,
an even number of the leg portions are inserted into each of the slots (20) in a row in the radial direction,
the segment coils (4) include a first segment coil (4a, 4a'), a second segment coil (4b, 4b'), and a third segment coil (4c, 4c'),
the leg portions of the first segment coil (4a, 4a') being inserted into a 2·i-1-th layer of one of two first slots (21) spaced four slots apart that lies on one side in the circumferential direction and into a 2·i-th layer of the other one of the two first slots (21) such that the leg portions protrude from a first end of the stator core (2), where i is an integer equal to or larger than 1 and i = 1, ..., imax,
the leg portions of the second segment coil (4b, 4b') being inserted into a 2·i-1-th layer of one of two second slots (22) lying on each side of the two first slots (21) and spaced six slots apart that lies on the one side in the circumferential direction and into a 2·i-th layer of the other one of the two second slots (22) such that the leg portions protrude from the first end of the stator core (2), and the second segment coil (4b, 4b') straddling a corresponding first segment coil (4a; 4a'), and
the leg portions of the third segment coil (4c, 4c') being inserted into a 2·i-1-th layer of one of predetermined first slot (21) and second slot (22) spaced five slots apart that lies on the one side in the circumferential direction and into a 2·i-th layer of the other one of the predetermined first slot (21) and second slot (22) such that the leg portions protrude from the first end of the stator core (2), and the third segment coil (4c, 4c') forming a winding start portion in a 2·i+1-th layer, and
on a side of the first end of the stator core (2),
each two of the leg portions that protrude from the 2·i-th layer of one of a first set including a first slot (21) and a second slot (22) spaced seven slots apart that lies on the one side in the circumferential direction and from the 2·i-1-th layer of the other one of the first set are twisted and joined together at leading end portions, and
each two of the leg portions that protrude from the 2·i-th layer of one of a second set including a first slot (21) and a second slot (22) spaced seven slots apart that lies on the one side in the circumferential direction and from the 2·i+1-th layer of the other one of the second set are twisted and joined together at leading end portions such that a winding end portion of the 2·i-th layer and the winding start portion of the 2·i+1-th layer are connected to each other.

7. The stator (1) according to claim 6, wherein, on the side of the first end of the stator core (2), a leading end portion of one of the leg portions of the third segment coil (4c, 4c') that protrudes from the 2·i+1-th layer of one of the predetermined first slot (21) and second slot (22) that lies on the one side in the circumferential direction and a leg portion that protrudes from the 2·i-th layer of one of the slots (20) spaced seven slots apart from that one of the predetermined first slot (21) and second slot (22) that lies on the one side are twisted and joined together at leading end portions.

8. The stator (1) according to claim 6 or 7, wherein one or a plurality of the leg portions that protrude from the first end of the stator core (2) are connected to a power line through which electricity is applied.

9. The stator (1) according to claim 8, wherein
the stator coils (3u, 3v, 3w) are connected in Y-connection, and
one or a plurality of the leg portions that protrude from the first end of the stator core (2) are connected to a neutral point.

10. The stator (1) according to claim 6 or 7, wherein a combination (2·imax, 4·m) of 2·imax that is the number of layers in each of the slots (20) and 4·m that is the number of the parallel coils is one of (6, 4), (10, 4), (14, 4), and (12, 8).
